# EUROPÄISCHE PATENTSCHRIFT

(11) **EP 1 956 038 B1**
(45) Veröffentlichungstag und Bekanntmachung des Hinweises auf die Patenterteilung: **23.09.2009**
(21) Anmeldenummer: 08450012.3
(22) Anmeldetag: 05.02.2008
(51) Int. Cl.: C08G 77/442, C08L 33/26, C08L 101/06

(54) **(Meth)acrylamid-Derivative von Polysiloxanen**
(Meth) acrylamide derivatives of polysiloxanes
Dérivés de (méth)acrylamide de polysiloxanes

(30) Priorität: 06.02.2007 AT 1922007
(43) Veröffentlichungstag der Anmeldung: 13.08.2008
(73) Patentinhaber: Mondi Release Liner Austria GmbH, 3331 Hilm (AT)
(72) Erfinder: Liska, Robert Dr. Dipl.-Ing. Ao Univ. Prog., 1200 Wien (AT); Kopeinig, Stefan, Dipl.-Ing., 6850 Dornbirn (AT); Gruber, Heinrich, Dr. Dipl.-Ing. Univ. Prof., 1190 Wien (AT); Knaus, Simone, Dr. Dipl.-Ing Ao Univ. Prof., 1100 Wien (AT); Hummer, Erwin, Dr. Dipl.-Ing., 3363 Hausmening (AT)
(74) Vertreter: Ellmeyer, Wolfgang

(56) Entgegenhaltungen:
- WO-A-97/00274
- US-A1- 2005 176 911

## Beschreibung

Die vorliegende Erfindung betrifft neue (Meth)acrylamid-Derivate von Polysiloxanen, solche Verbindungen enthaltende polymerisierbare Zusammensetzungen, durch Polymerisation derselben erhaltene Produkte sowie Verwendungen dieser Verbindungen und Produkte.

### STAND DER TECHNIK

Polyorganosiloxane, vor allem vernetzbare Polyorganosiloxane, sind zur Beschichtung von Substraten mit Abhäsivmaterial, d.h. als Antihaftbeschichtungen, seit langem bekannt. So werden damit beispielsweise Kunststofffolien oder Papier beschichtet, um Produkte zu erhalten, die sich von Haftflächen, vor allem von mit Klebstoffen versehenen Oberflächen, leicht ablösen lassen. Anwendungen umfassen beispielsweise diverse Abziehfolien, Trennpapier und speziell Träger für Selbstklebeetiketten.

Die Herstellung der Abhäsivbeschichtung erfolgt üblicherweise durch einfaches Aufbringen einer polymerisierbaren Zusammensetzung und Härten derselben, vorzugsweise mittels Photopolymerisation. Für diesen Zweck enthält das modifizierte Polyorganosiloxan vorzugsweise eine oder mehrere ungesättigte Doppelbindungen, z.B. (Meth)acrylatgruppen. Derartige Polyorganosiloxane werden beispielsweise in der DE 23 35 118 beschrieben.

Zur Verbesserung verschiedener Eigenschaften wie etwa Flexibilität und Abhäsiveigenschaften der Beschichtung sowie zur Optimierung des Beschichtungsverfahrens in Abhängigkeit von der jeweiligen Klebefläche wurden hydroxyfunktionelle polymerisierbare Polyorganosiloxane entwickelt, die u.a. (Meth)acrylsäureester als polymerisierbaren Anteil aufweisen. So offenbart die EP 169.592 einen Kunststoffüberzug für optische Glasfasern, der aus Polyorganosiloxan-Copolymeren besteht, deren Monomere zum Teil neben zwei Acrylsäureestergruppen pro Molekül weitere polare Gruppen, vorzugsweise Hydroxylgruppen, aufweisen. Dadurch werden gute Mischbarkeit, eine niedrige Glastemperatur und ein niedriger Elastizitätsmodul der Überzüge erreicht. Die Position der Hydroxylgruppen wird nicht näher erläutert.

Die DE 38 10 140 der Goldschmidt AG offenbart die Verwendung ähnlicher monomerer Polyorganosiloxane, die durch Veresterung eines Polyorganosiloxan-Vorläufers mit Hydroxylgruppen enthaltenden Gruppen im Molekül mit (Meth)acrylsäure sowie gegebenenfalls einer nicht polymerisierbaren Monocarbonsäure erhalten werden. In einer Ausführungsform bleiben nach der Veresterung im Durchschnitt zumindest 0,8 Hydroxylgruppen pro Molekül übrig, die durchwegs primäre Hydroxylgruppen an den Enden von Haupt- oder Seitenketten sind. In einer bevorzugten Ausführungsform sind sämtliche Hydroxylgruppen verestert. Die Polysiloxankette kann mit Polyoxyalkylen-Substituenten aus bis zu 50 Oxyalkyleneinheiten substituiert sein. Als Auswirkung der Hydroxylgruppen, sofern vorhanden, wird eine Verringerung der Abhäsivität erwähnt, um auf diese Weise die Antihaftbeschichtung an den darauf zum Einsatz kommenden Klebstoff anpassen zu können.

In der kurz danach angemeldeten DE 38 20 294 derselben Anmelderin werden Polyorganosiloxane offenbart, die ähnlich den obigen aufgebaut sind, mit dem Unterschied, dass die Säuregruppierungen der veresterten Hydroxylgruppen nicht durch direkte Veresterung, sondern durch Addition der Säuren an Epoxygruppen eingeführt werden, so dass jeweils eine β-ständige Hydroxylgruppe pro (Meth)acrylsäureestersowie pro nicht polymerisierbarer Monocarbonsäure-Gruppierung gebildet wird, die als solche im Molekül bestehen bleiben. Es werden keinerlei Vorteile dieser Hydroxylgruppen oder ihrer Position im Molekül erwähnt.

Die bereits davor veröffentlichte DE 30 44 237 beschreibt so genannte "acrylierte Epoxysilicone" als Monomere in Lackformulierungen als Überzüge für Drucktinte. Diese werden durch Addition von (Meth)acrylsäure an Polyorganosiloxane mit 1 bis 5 seitenständigen Epoxyfunktionalitäten, ausgewählt aus mit Allylglycidyl- und Vinylepoxycyclohexan-Gruppierungen modifizierten Polyorganosiloxanen, erhalten und weisen somit pro (Meth)acrylatgruppe ebenfalls eine Hydroxylgruppe in β-Stellung dazu auf. Die Länge der Polyorganosiloxankette ist zwischen 3 und 115 variabel, und Letztere kann mit Polyoxyalkylenketten aus bis zu 50 Oxyalkylen-Einheiten substituiert sein. Als Vorteile dieser Monomere bzw. Präpolymere werden die niedrige Viskosität der Formulierung vor der Härtung, rasche Härtung zu einem Hochglanzüberzug mit guter Biegsamkeit und Haftung offenbart. Besondere Vorteile der Stellung der Hydroxylgruppe werden nicht beschrieben. Das Gebiet der Abhäsiv- oder Antihaftbeschichtungen wird ebenfalls nicht angesprochen. In der DE 38 20 294 wird dieses Dokument zitiert und festgestellt, dass derartige Produkte "als abhäsive Beschichtungsmassen nur mit erheblichen Einschränkungen brauchbar [sind], da jeder Acrylsäureestergruppe eine Hydroxylgruppe gegenübersteht und eine Anpassung der Beschichtungsmittel an das Substrat, gegenüber dem sie ihre Abhäsivität entwickeln müssen, nicht möglich ist".

Die US 6.211.322 der Goldschmidt AG offenbart Polyorganosiloxane, die wiederum ähnlich den in DE 38 10 140 beschriebenen aufgebaut sind, allerdings durch Hydrosilylierung von ungesättigten Polyoxyalkenylethern mit endständigen primären Hydroxylgruppen und anschließende Veresterung Letzterer mit (Meth)acryl- und gegebenenfalls einer nicht polymerisierbaren Monocarbonsäure hergestellt werden. Verbleibende Hydroxylgruppen sind zumindest 3 Kohlenstoffatome von der nächsten (Meth)acrylatestergruppe beabstandet. Vorteile der Hydroxylgruppen werden keine genannt.

Alle der nach dem Stand der Technik bekannten, mit (Meth)acrylatgruppen modifizierten Polyorganosiloxane weisen den Nachteil auf, dass entweder die Reaktionsgeschwindigkeit relativ gering ist und mit Fortdauer der Polymerisation und damit einhergehender Abnahme der Konzentration reaktionsfähiger Doppelbindungen weiter abnimmt und/oder der erzielbare Doppelbindungsumsatz, d.h. der Prozentsatz der polymerisierten, bezogen auf alle verfügbaren Doppelbindungen, relativ gering ist. Dies ist vor allem bei langkettigen Polyorganosiloxanen zu beobachten, bei denen eine starke "Verdünnung" der (Meth)acrylatreste unter der großen Anzahl an Siloxan-Grundeinheiten gegeben ist, so dass Erstere während des Polymerisationsvorgangs verhältnismäßig große freie Weglängen diffusiv zurückzulegen haben. Hohe Molekulargewichte der so polymerisierten und dabei gegebenenfalls vernetzten Polyorganosiloxane sind nur schwer zu erreichen. Ein einfaches Vorsehen einer größeren Anzahl an reaktiven Doppelbindungen pro Molekül erhöht zwar die Polymerisationsrate, ist aber aufgrund von (zu) starker Vernetzung für die Flexibilität der so erzeugten Beschichtungen abträglich und erhöht somit auch den Doppelbindungsumsatz nicht.

Bekannt sind weiters Polysiloxane mit über Spacer angebundenen (Meth)acrylamid-Gruppierungen. Die Herstellung der Amide erfolgt üblicherweise mittels Acylierung entsprechender Amino-Derivate der Polysiloxane. Dazu siehe beispielsweise die EP 220.693, worin ganz allgemein vernetzbare Di(meth)acrylamido-Derivate beliebiger Organosiliziumverbindungen beschrieben werden, und EP 400.785, EP 315.342 sowie US 5.246.979, die ebenfalls derartige Polysiloxane ohne Hydroxygruppen beschreiben.

Zwar sind Acrylamide bekanntermaßen reaktiver als ihre (Meth)acrylsäureester-Analoge, das oben erläuterte Problem der "Verdünnung" der reaktiven Gruppen und die damit verbundenen Nachteile lassen sich jedoch auch durch einfaches Ersetzen von Acrylaten durch entsprechende Acrylamide nicht lösen.

Schließlich offenbart die US 2005/0176911 A1 siliziumhältige (Meth)acrylamid-Monomere mit OH-Gruppen in β-Stellung zum (Meth)acrylamido-Rest, die in bestimmten Ausführungsformen alkylsubstituierte Disiloxane sein können. Größere Kettenlängen der Monomere werden nicht in Betracht gezogen. Diese Monomere können u. a. mit siliconhältigen Monomeren oder (Prä-)Polymeren copolymerisiert werden und dienen vorwiegend als Mischhilfe ("compatibilizer"), d.h. als Vermittler zwischen hydrophilen und Silicon-Comonomeren bei der Herstellung hydrophiler Siliconhydrogele für ophthalmisches (z.B. Kontaktlinsen-) Material. Eine Verwendung für (hydrophobe) Abhäsivbeschichtungen wird demnach mit keinem Wort erwähnt. Die β-Stellung der Hydroxylgruppe ergibt sich einmal mehr aus der Herstellung über die Addition von Ammoniak an Epoxide. Es werden keinerlei Vorteile der Gegenwart oder der Position dieser Hydroxylgruppe genannt.

Ziel der Erfindung vor diesem Hintergrund war daher die Bereitstellung neuer modifizierter Polyorganosiloxane mit erhöhter Reaktivität, die in der Lage sind, rasch und möglichst vollständig, z.B. zu Antihaftbeschichtungsfilmen, auszuhärten.

### OFFENBARUNG DER ERFINDUNG

Dieses Ziel wird in einem ersten Aspekt der Erfindung durch Bereitstellung von (Meth)acrylamid-modifizierten linearen Polyorganosiloxanen der allgemeinen Formel (1) erreicht: 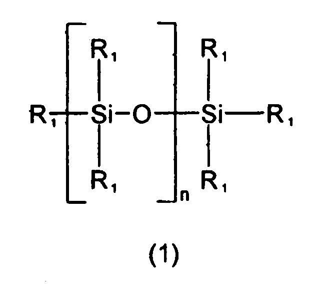 worin die R₁ jeweils unabhängig voneinander aus Alkylgruppen mit 1 bis 4 Kohlenstoffatomen, Phenylgruppen und Resten der nachstehenden Formeln (2) und (3) ausgewählt sind, mit der Maßgabe, dass zumindest ein R₁ ein Rest der Formel (2) oder (3) ist, und n eine ganze Zahl von zumindest 10, vorzugsweise zumindest 20, ist, 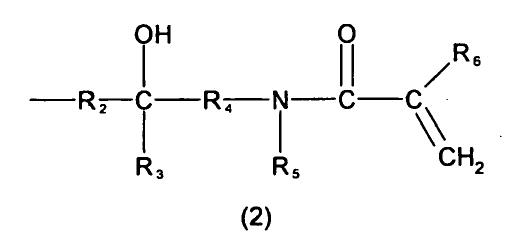 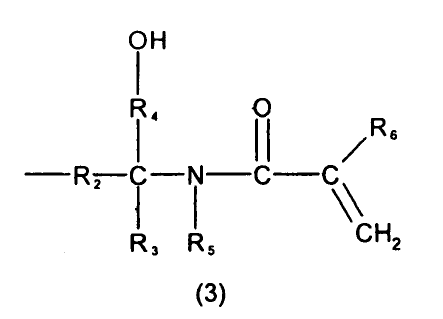 worin R₂ eine direkte Bindung oder ein gegebenenfalls Heteroatome enthaltender, gegebenenfalls mit -OH, Amino oder Acylamino substituierter, unverzweigter, verzweigter oder zyklischer zweiwertiger Kohlenwasserstoffrest mit 1 bis 20, vorzugsweise 2 bis 10, Kohlenstoffatomen ist;
R₃ ein Wasserstoffatom oder eine Alkylgruppe mit 1 bis 4 Kohlenstoffatomen, vorzugsweise ein Wasserstoffatom, ist;
R₄ ein gegebenenfalls Heteroatome enthaltender und gegebenenfalls mit -OH, Amino oder Acylamino substituierter, unverzweigter, verzweigter oder zyklischer zweiwertiger Kohlenwasserstoffrest mit 1 bis 20, vorzugsweise 1 bis 6, Kohlenstoffatomen ist; oder
R₂ und R₄ gemeinsam mit dem Kohlenstoffatom, an das sie gebunden sind, einen Ring bilden;
R₅ ein Wasserstoffatom oder eine Alkylgruppe mit 1 bis 4 Kohlenstoffatomen, vorzugsweise eine Alkylgruppe mit 1 bis 4 Kohlenstoffatomen, ist; und
R₆ ein Wasserstoffatom oder Methyl, vorzugsweise ein Wasserstoffatom, ist.

Mit diesen neuen (Meth)acrylamid-modifizierten Polyorganosiloxanen sind bei Verwendung als Monomere in polymerisierbaren Zusammensetzungen deutlich höhere Polymerisationsraten und Doppelbindungsumsätze bei der Herstellung von Beschichtungen möglich als mit den acrylatmodifizierten Verbindungen nach dem Stand der Technik. Dies liegt einerseits an der dem Fachmann bekannten höheren Reaktivität von (Meth)acrylamiden gegenüber den entsprechenden Estern. Andererseits nehmen die Erfinder - ohne sich auf eine bestimmte Theorie festlegen zu wollen - an, dass sowohl die OH-Gruppe als auch die NH-Gruppe (bei Verbindungen, in denen R₅ ein Wasserstoffatom ist) intermolekulare Wasserstoffbrückenbindungen mit Sauerstoff- und Stickstoffatomen, vor allem mit der (Meth)acrylamid-Gruppe, von benachbarten Molekülen ausbilden können, was einen Orientierungseffekt auf Letztere ausübt. Auch hier sind, wie die Erfinder weiters annehmen, Amidogruppen gegenüber den entsprechenden Estern klar im Vorteil, da Sauerstoff eine höhere Elektronegativität als Stickstoff aufweist, so dass der Carboxylsauerstoff in Säureamiden [-C(=O)N-] eine höhere negative Partialladung aufweist als in Estern [-C(=O)O-], wo Mesomerieeffekte zwischen den beiden Sauerstoffatomen dem entgegenwirken. Die Ausbildung der Wasserstoffbrückenbindungen wird dadurch im Falle von Amiden begünstigt.

Die - im Vergleich zur langen, hydrophoben Polysiloxankette sehr kleinen - polymerisierbaren, hydrophilen Gruppen der Formeln (2) und (3), die zur Polymerisation miteinander in Kontakt treten müssen, kommen durch eben diese Ausbildung der Wasserstoffbrücken in unmittelbarer räumlicher Nähe zu liegen, was die von den Molekülen bzw. Molekülenden während des Polymerisationsvorgangs zurückzulegenden freien Weglängen dramatisch verkürzt und somit die Polymerisation erheblich beschleunigt. Diese erfindungsgemäße Wirkung einer "Präorganisation" kommt speziell mit Fortdauer der Polymerisationsreaktion, d.h. bei stetig sinkender Konzentration der reaktiven Gruppen, zum Tragen, sodass es zu einer deutlich rascheren Aushärtung und einem höheren Doppelbindungsumsatz kommt als nach dem Stand der Technik.

Vorzugsweise ist R₅ eine Niederalkylgruppe, um die Viskosität niedrig zu halten, so dass nicht zwingend ein Lösungsmittel erforderlich ist, und R₆ ist vorzugsweise ein Wasserstoffatom, da Acrylamide signifikant rascher und vollständiger polymerisieren als die entsprechenden Methacrylamide.

Vorzugsweise steht die OH-Gruppe in den Formeln (2) und 3) der erfindungsgemä-ßen Polyorganosiloxane in β-Stellung zum Stickstoff der (Meth)acrylamid-Gruppe. Dadurch sind die Verbindungen nicht nur vergleichsweise einfach durch Addition von Ammoniak oder Aminen an Epoxide und anschließende (Meth)acrylierung des Stickstoffatoms herzustellen, sondern vor allem kommt der zuvor beschriebene Orientierungseffekt hier am besten zur Geltung, da sich so die (Meth)acrylatgruppe eines über Wasserstoffbrücken gebundenen zweiten Moleküls direkt neben jener des ersten anordnet. Zudem sind Verbindungen mit Resten der Formel (2) gegenüber jenen der Formel (3) bevorzugt, da diese bei Addition an Epoxid-Derivate sterisch bevorzugt gebildet werden und somit einfacher herzustellen sind.

Theoretisch wäre die α-Stellung der OH-Gruppe zumindest ebenso geeignet, allerdings sind die entsprechenden α-Hydroxyamine der Vorstufen zu den erfindungsgemäßen (Meth)acrylamiden chemisch instabil. Zudem wäre eine einfache Herstellung über Addition von Aminen an Epoxid-Derivate nicht möglich, und schließlich könnte die Wasserstoffbrücke unter Ausbildung eines sechsgliedrigen Rings mit der Acrylamidgruppe bereits intramolekular mit dem Acryl-Sauerstoff gebildet werden, so dass es in weitaus geringerem Maße zur gewünschten Präorganisation der Moleküle in der Beschichtungszusammensetzung käme.

Vorzugsweise sind 1 bis 10, noch bevorzugter 1 bis 6, noch bevorzugter 2 bis 4, der Reste R₁ im erfindungsgemäßen Polyorganosiloxan polymerisierbare Reste der Formel (2) oder (3), was eine rasche Polymerisation ohne übermäßig starke Vernetzung ermöglicht. Dabei können die polymerisierbaren Reste sowohl end- als auch seitenständig an das Polysiloxan gebunden sein.

Vorzugsweise ist bei den erfindungsgemäßen Polyorganosiloxanen zumindest ein R₁ an einem Ende der Polyorganosiloxan-Kette ein Rest der Formel (2) oder (3). Durch Anbindung der reaktiven Gruppierung am Ende der linearen Polyorganosiloxane wird der obige Orientierungeffekt weiter verstärkt und ihre Polymerisation dadurch noch weiter beschleunigt.

Die nicht der Formel (2) oder (3) entsprechenden Reste R₁ sind in allen Fällen vorzugsweise Methyl oder Phenyl, so dass gängige, handelsübliche Polyorganosiloxane zu den erfindungsgemäßen Derivaten modifiziert werden können.

Erfindungsgemäß bevorzugt sind weiters Polyorganosiloxane, in denen R₃ ein Wasserstoffatom ist, d.h. die Hydroxylgruppe eine sekundäre Hydroxylgruppe ist, wodurch etwaigen sterischen Hinderungen bei der Ausbildung der Wasserstoffbrücken wirksam vorgebeugt wird.

In weiteren bevorzugten Ausführungsformen ist R₂ -(CH₂)₂-O-CH₂- oder -(CH₂)₃-O-CH₂-, was die Herstellung der erfindungsgemäßen Polyorganosiloxane über eine problemlos und kostengünstig durchführbare Hydrosilylierung von Vinyl- oder Allylglycidylether oder Derivaten davon ermöglicht. Ansonsten kommen nahezu beliebige zweiwertige Kohlenwasserstoffgruppen, vor allem Alkylgruppen, als Spacer zwischen dem Polysiloxan und dem die Hydroxylgruppe tragenden Kohlenstoffatom in Frage, wobei jedoch aromatische Reste oder solche mit konjugierten Doppelbindungen aufgrund möglicher Verschiebungen der Absorptionsbanden nicht bevorzugt sind.

Um, wie zuvor erwähnt, die Hydroxylgruppe möglichst nahe (d.h. in β-Stellung) an der (Meth)acrylamido-Gruppierung der Formeln (2) und (3) anzuordnen, ist Rest R₄ vorzugsweise -CH₂-.

In speziellen bevorzugten Ausführungsformen entspricht zumindest ein Rest R₁ der folgenden Formel (6) oder (7): 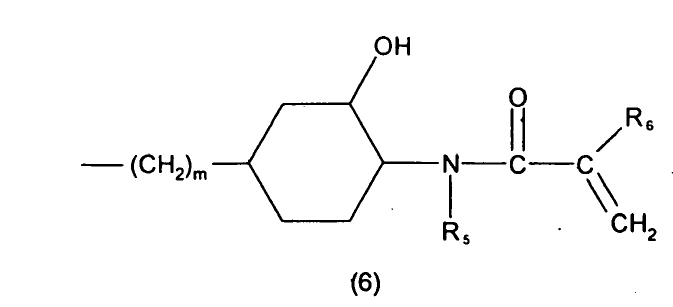 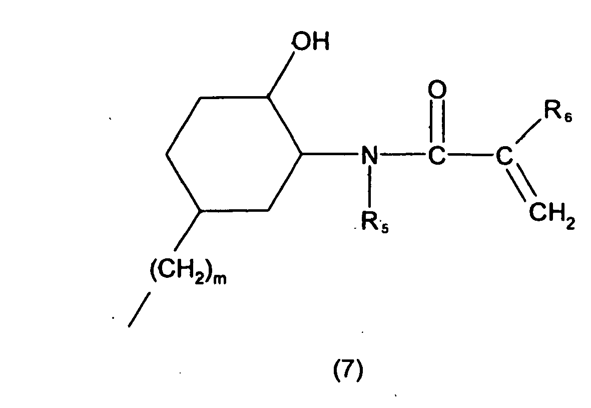 worin m eine ganze Zahl von 2 bis 6, vorzugsweise 2 oder 3, ist. Diese Struktur bringt einerseits den Vorteil mit sich, dass die in β-Stellung befindliche Hydroxylgruppe - trotz freier Drehbarkeit des Cyclohexylen-Rests - zwingend in Richtung der (Meth)acrylamido-Gruppe weist, wodurch eine über eine Wasserstoffbrücke gebundene (Meth)acrylamido-Gruppe eines zweiten, benachbarten Polyorganosiloxan-Moleküls der Erfindung sehr nahe an jene des ersten herangeführt wird, was deren Polymerisation beschleunigt. Andererseits kann auf diese Weise das erfindungsgemäße Polyorganosiloxan aus leicht verfügbaren Ausgangsprodukten hergestellt werden, etwa aus einem Polysiloxan mit SiH-Gruppe, einem mit einem ungesättigten Rest, aus Verfügbarkeitsgründen vorzugsweise Vinyl oder Allyl, substituierten Epoxycyclohexan und aus Ammoniak oder einem Amin, das anschließend (meth)acryliert wird, wie dies später im experimentellen Teil ausführlicher beschrieben wird.

Die optionalen Substituenten der Reste R₂, R₄, R₇ und R₈ sind vorzugsweise unabhängig voneinander aus -OH und -NHR₁₀ ausgewählt, worin R₁₀ ein Wasserstoffatom oder ein (Meth)acrylrest ist. Dies bewirkt, dass zusätzliche, zur Ausbildung von Wasserstoffbrücken fähige Funktionalitäten und/oder polymerisierbare (Meth)acrylgruppen eingeführt werden, was den Orientierungseffekt verstärkt bzw. die Reaktionsgeschwindigkeit und/oder den Doppelbindungsumsatz bei der Polymerisation erhöht. Wenn mehr als ein Stickstoffatom im Polyorganosiloxan-Molekül der Erfindung enthalten ist, sind vorzugsweise alle mit einem (Meth)acrylrest substituiert. Allgemein kann festgestellt werden, dass bei zunehmender Kettenlänge des Polysiloxananteils im Molekül auch die Anzahl der -OH und -NH enthaltenden Gruppen erhöht werden kann, ohne dass das Molekül insgesamt zu hydrophil würde, was einen Verlust an Abhäsivwirkung zur Folge hätte. Allerdings ist zu beachten, dass eine höhere Anzahl an intermolekularen Wasserstoffbrücken die Viskosität der die erfindungsgemäßen Polyorganosiloxane enthaltenden Beschichtungszusammensetzungen erhöht, so dass der Fachmann auch hier eine für die jeweilige Anwendung optimale Wahl zu treffen hat und gegebenenfalls ein Lösungsmittel in eine solche Zusammensetzung miteinbeziehen wird.

Ein zweiter Aspekt der Erfindung betrifft daher polymerisierbare Zusammensetzungen, die jeweils zumindest ein (Meth)acrylamid-modifiziertes lineares Polyorganosiloxan als Monomer, gegebenenfalls im Gemisch mit weiteren Comonomeren, zumindest einen Polymerisationskatalysator, vorzugsweise einen Photopolymerisationskatalysator, und gegebenenfalls ein Lösungsmittel umfassen. Weitere mögliche Additive, wie z.B. Pigmente, Farbstoffe oder Verlaufmittel etc., sind nicht speziell eingeschränkt, solange die Wirkung der erfindungsgemäßen Verbindungen dadurch nicht beeinträchtigt wird.

Weitere Aspekte der Erfindung betreffen a) die Verwendung der offenbarten (Meth)-acrylamid-modifizierten linearen Polyorganosiloxane oder von selbige enthaltenden Zusammensetzungen zum Beschichten von Gegenständen, vorzugsweise mit einer Antihaftbeschichtung; b) durch Polymerisation einer erfindungsgemäßen Zusammensetzung erhaltene gehärtete Produkte, die vorzugsweise Antihaftbeschichtungsfilme sind; sowie c) mit derartigen Antihaftbeschichtungsfilmen beschichtete Gegenstände, vorzugsweise beschichtetes Papier oder beschichtete Kunststofffolien.

Die Erfindung wird anhand der nachstehenden Beispiele und Vergleichsbeispiele detaillierter beschrieben, die jedoch lediglich zur Illustration der Erfindung und nicht als Einschränkung derselben dienen sollen.

### BEISPIELE

Zur Veranschaulichung und zum leichteren Verständnis wurden in den folgenden Synthesen und Aktivitätsmessungen ausschließlich Polydimethylsiloxan- (PDMS-) Derivate unterschiedlicher Kettenlänge verwendet. Für den Fachmann ist freilich selbstverständlich, dass die Erfindung in analoger Weise auch mit zahlreichen anderen handelsüblichen Polysiloxanen ausgeführt werden kann.

Weiters werden aus denselben Gründen sowie zu Vergleichszwecken mit handelsüblichen Substanzen ausschließlich di- und tetrafunktionelle Acrylamido-Derivate beschrieben, obwohl die Wirkung der Verbindungen der Erfindung natürlich auch bei mono- oder anderen höherfunktionellen Verbindungen zutage tritt. Wie eingangs erwähnt ist eine höhere Anzahl an polymerisierbaren Gruppen für viele Anwendungen nicht bevorzugt, da ansonsten bei der Polymerisation zu starke Vernetzung auftreten kann, wodurch die Produkte zu hart und unflexibel werden, um für Anwendungen wie etwa Antihaftbeschichtungen geeignet zu sein. Auch kann die Lagerstabilität der Beschichtungen durch etwaige nichtumgesetzte Doppelbindungen beeinträchtigt sein, z.B. kann es zu unerwünschten Reaktionen und/oder Verfärbungen der beschichteten Substrate kommen. Zudem erhöht eine zu große Anzahl an Wasserstoffbrücken bildenden Resten die Viskosität, so dass eine Polymerisation ohne Lösungsmittel, wie dies für zahlreiche Anwendungen bevorzugt wird, unmöglich werden kann. Für bestimmte Einsatzbereiche kann aber dennoch eine größere Anzahl an polymerisierbaren Gruppen wünschenswert sein, speziell - wie bereits erwähnt - bei sehr langkettigen Polyorganosiloxanen, z.B. zur Ausbildung von Polymeren mit Kammstruktur.

Somit ist die Kettenlänge des Polyorganosiloxan-Backbones ein wesentlicher Faktor. Generell gilt, dass bei zunehmender Kettenlänge auch die Anzahl an Resten der Formeln (2) bis (7) zunehmen kann. Zu Vergleichzwecken und zur Demonstration der Erfindung werden Beispiele und Vergleichsbeispiele mit Verbindungen in drei verschiedenen Kettenlängen, nämlich mit durchschnittlich rund 15 (niedriges Molekulargewicht), rund 30 (mittleres Molekulargewicht) und rund 80 Si-Atomen (hohes Molekulargewicht) angeführt.

Für die nachstehend beschriebenen Additionen von Aminen bzw. Ammoniak an Epoxide existieren - je nachdem, an welchem Kohlenstoffatom der Angriff des Amin-Stickstoffs erfolgt, - jeweils zwei mögliche Additionsprodukte, von denen aufgrund von sterischen Gegenbenheiten eines bevorzugt gebildet werden kann. Beispielsweise ist im Falle von Additionen an Glycidylreste die Bildung jenes Isomers, das durch Angriff des Amin-Stickstoffs am primären Kohlenstoffatom entsteht, deutlich bevorzugt. Daraus wird in der Folge die jeweilige erfindungsgemäße Verbindung mit einem oder mehreren Resten der Formel (2) bzw. (4) erhalten. Mit zunehmender Größe des Substituenten am Stickstoff kommt dieser sterische Effekt immer stärker zur Geltung, wobei jedoch bereits bei der Reaktion mit Ammoniak weit über 90 % des Produkts mit endständigem Stickstoff erhalten werden. Da sich weder die Reaktivität der jeweiligen Isomere bei der nachfolgenden Umsetzung zu den erfindungsgemäßen Verbindungen mit Resten der Formel (2) bzw. (4) noch die Aktivität der Letzteren bei der Polymerisation nennenswert voneinander unterscheiden, werden die erhaltenen Isomerengemische ohne Auftrennung eingesetzt. Die nachfolgenden Reaktionsschemata und NMR-Daten beziehen sich in allen Fällen auf das bevorzugte Produkt, zumal das jeweilige "Neben"-Produkt im NMR-Spektrum praktisch nicht erkennbar war.

Bei der Addition an das Epoxycyclohexyl-Derivat ist keines der beiden Isomere gegenüber dem anderen sterisch signifikant bevorzugt, so dass ein Isomerengemisch erhalten wurde, das die beiden möglichen Verbindungen mit Resten der Formeln (6) und (7) wohl in etwa gleichen Mengen enthielt. Eine Quantifizierung der Isomere mittels NMR war unmöglich, und eine Auftrennung nicht ohne Weiteres möglich, weswegen - auch aufgrund gleicher anzunehmender Reaktivität - das Isomerengemisch als solches für die Acrylierung und die spätere Polymerisation eingesetzt wurde.

In allen Fällen der Addition von Aminen an Epoxide entstehen Verbindungen mit einer OH-Gruppe in β-Stellung zum späteren Amid-Stickstoffatom, so dass bei der Polymerisation der jeweiligen erfindungsgemäßen Verbindungen der zuvor beschriebene Orientierungseffekt deutlich zutage tritt. Aus diesem Grund liegen natürlich jeweils beide Isomere im Schutzumfang der vorliegenden Erfindung.

Alle NMR-Daten wurden auf einem Bruker AC-E-200 FT-NMR-Spekrometer bei 200 MHz aufgenommen. Die Anzahl der Dimethylsilylgruppen zuzuschreibenden Wasserstoffatome wurde jeweils auf die nächste durch 6 teilbare ganze Zahl auf- oder abgerundet, um einen ganzzahligen Wert für n zu erhalten.

Die Nummern erfindungsgemäßer Verbindungen sind unterstrichen.

### Synthesebeispiele 1 bis 3

### Herstellung von hydroxyfunktionellem, methylamino-terminiertem PDMS

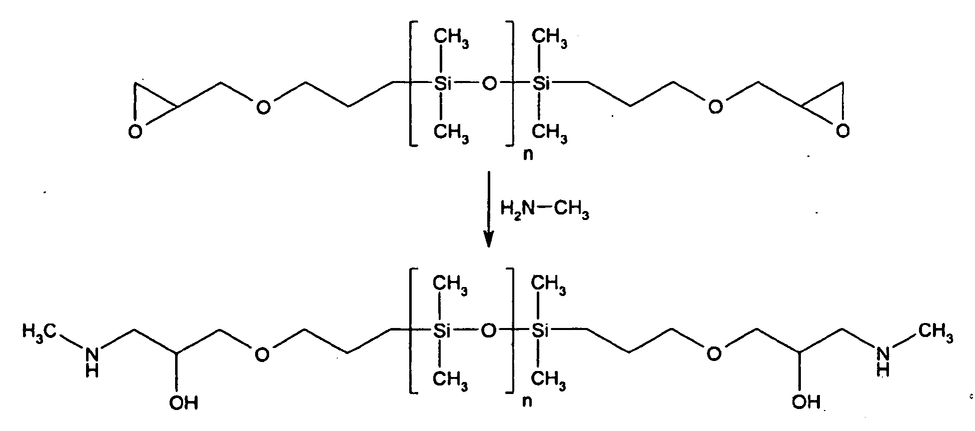

### Synthesebeispiel 1

### Herstellung von hydroxyfunktionellem, methylamino-terminiertem PDMS [1] mit mittlerem Molekulargewicht durch Addition von Methylamin an PDMS-Diepoxid

60 g von im Handel (z.B. als Tegomer^{®} E-Si 2330 der Fa. Tego) erhältlichem glycidyloxypropyl-terminiertem PDMS, d.h. PDMS mit 3-(Oxiranylmethoxy)propyl-Endgruppen, aus rund 30 SiO-Einheiten, 190 ml einer 8 M Lösung von Methylamin in Ethanol und 170 ml Ethanol wurden im Autoklaven 12 h lang bei 50 °C gerührt. Nach Abziehen von überschüssigem Methylamin und Ethanol im Vakuum wurden 59,3 g der Verbindung [1] als farbloses, klares Öl erhalten.
¹H-NMR (CDCl₃, δ, ppm): 3,86 (m, 2H, CH), 3,39 (m, 8H, CH₂-O-CH₂), 2,86 (bs, 4H, OH, NH), 2,70-2,50 (m, 4H, N-CH₂), 2,41 (s, 6H, N-CH₃), 1,59 (m, 4H, Si-CH₂-CH₂), 0,50 (m, 4H, Si-CH₂), 0,05 (m, 168H, Si-CH₃).

Bei Zugabe von D₂O verschwand das Signal der somit als azid bewiesenen Wasserstoffatome der OH- und NH-Gruppen bei 2,86 ppm. Aus den (gerundeten) 168 Wasserstoffatomen der CH₃-Si-Elemente folgte eine durchschnittliche Kettenlänge von 28 Si-Atomen.
¹³C-NMR (CDCl₃, δ, ppm): 74,28, 73,78 (C-O-C), 68,57 (C-OH), 54,37 (CH₂N), 36,25 (CH₃N), 23,33 (Si-C-C), 14,08 (Si-C-C), 0,97 (Si-CH₃).

Bei GPC-Analyse entsprach die Polydispersität von Verbindung [1] jener des epoxyterminierten PDMS, d.h. die GPC-Kurven von Ausgangs- und Zielverbindung waren gleich.

### Synthesebeispiel 2

### Herstellung von hydroxyfunktionellem, methylamino-terminiertem PDMS [2] mit hohem Molekulargewicht durch Äquilibrierung von [1] mit Octamethylcyclotetrasiloxan

6,0 g [1], 12,0 g Octamethylcyclotetrasiloxan und 50 mg Tetramethylammoniumhydroxid wurden bei 80 °C 96 h lang unter Stickstoffatmosphäre gerührt. Niedermolekulare Anteile im Äquilibrierungsgleichgewicht wurden im Vakuum bei Raumtemperatur bis zur Gewichtskonstanz entfernt. Es wurden 16,2 g von Verbindung [2] als farbloses, klares Öl erhalten.
¹H-NMR (CDCl₃, δ, ppm): 3,86 (m, 2H, CH), 3,39 (m, 8H, CH₂-O-CH₂), 2,70-2,50 (m, 4H, N-CH₂), 2,41 (s, 6H, N-CH₃), 1,59 (m, 4H, Si-CH₂-CH₂), 0,50 (m, 4H, Si-CH₂), 0,05 (m, 492H, Si-CH₃).
¹³C-NMR (CDCl₃, δ, ppm): 74,28, 73,78 (C-O-C), 68,57 (C-OH), 54,37 (CH₂N), 36,25 (CH₃N), 23,33 (Si-C-C), 14,08 (Si-C-C), 0,97 (Si-CH₃).

Aus den 492 Wasserstoffatomen der CH₃-Si-Elemente ergab sich eine durchschnittliche Kettenlänge von 82 Si-Atomen.

### Synthesebeispiel 3

### Herstellung von hydroxyfunktionellem, methylamino-terminiertem PDMS [3] mit niedrigem Molekulargewicht durch Depolymerisation von [1]

16,0 g [1] wurden zusammen mit 60 mg Tetramethylammoniumhydroxid bei 80 °C im Vakuum 5 h lang gerührt und anschließend 48 h lang unter Stickstoffatmosphäre und Normaldruck äquilibriert. Niedermolekulare Anteile wurden bei Raumtemperatur im Vakuum entfernt. Es wurden 9,3 g von Verbindung [3] als leicht milchiges Öl erhalten.
¹H-NMR (CDCl₃, δ, ppm): 3,86 (m, 2H, CH), 3,39 (m, 8H, CH₂-O-CH₂), 2,70-2,50 (m, 4H, N-CH₂), 2,41 (s, 6H, N-CH₃), 1,59 (m, 4H, Si-CH₂-CH₂), 0,50 (m, 4H, Si-CH₂), 0,05 (m, 84H, Si-CH₃).
¹³C-NMR (CDCl₃, δ, ppm): 74,28, 73,78 (C-O-C), 68,57 (C-OH), 54,37 (CH₂N), 36,25 (CH₃N), 23,33 (Si-C-C), 14,08 (Si-C-C), 0,97 (Si-CH₃).

Aus den 84 Wasserstoffatomen der CH₃-Si-Elemente folgte eine durchschnittliche Kettenlänge von 14 Si-Atomen.

### Synthesebeispiele 4 bis 6

### Herstellung von hydroxyfunktionellem, amino-terminiertem PDMS

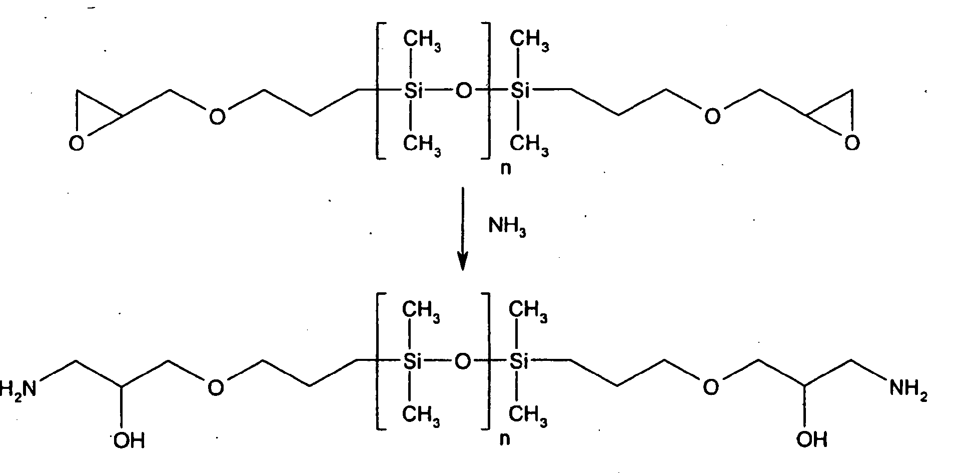

### Synthesebeispiel 4

### Herstellung von hydroxyfunktionellem, amino-terminiertem PDMS [4] mit mittlerem Molekulargewicht durch Addition von Ammoniak an PDMS-Diepoxid

Die Synthese erfolgte analog zu Synthesebeispiel 1 mit einer 7 M Lösung von Ammoniak in Methanol. Verbindung [4] wurde in nahezu quantitativer Ausbeute als farbloses, klares Öl erhalten.
¹H-NMR (CDCl₃, δ, ppm): 3,69 (m, 2H, CH), 3,38 (m, 8H, CH₂-O-CH₂), 2,85-2,60 (m, 4H, N-CH₂), 2,26 (bs, 6H, OH, NH₂), 1,56 (m, 4H, Si-CH₂-CH₂), 0,48 (m, 4H, Si-CH₂), 0,05 (m, 162H, Si-CH₃).
¹³C-NMR (CDCl₃, δ, ppm): 74,26, 73,09 (C-O-C), 70,89 (C-OH), 44,48 (CH₂N), 23,32 (Si-C-C), 14,07 (Si-C-C), 0,95 (Si-CH₃).

Aus den 162 Si-CH₃-Wasserstoffatomen ergaben sich 27 Si-Atome pro Molekül.

### Synthesebeispiele 5 und 6

Hydroxyfunktionelles, amino-terminiertes PDMS [5] mit hohem Molekulargewicht und hydroxyfunktionelles, amino-terminiertes PDMS [6] mit niedrigem Molekulargewicht wurden analog zu den Synthesebeispielen 2 und 3 durch Äquilibrierung von [4] mit Octamethylcyclotetrasiloxan bzw. Depolymerisation von [4] hergestellt und fielen in praktisch quantitativer Ausbeute als farblose, klare Öle an. Die Anzahl der Si-Atome wurde aus dem ¹H-NMR-Spektrum mit 80 bzw. 16 ermittelt.

### Synthesebeispiele 7 bis 9

### Herstellung von diamino-terminiertem PDMS

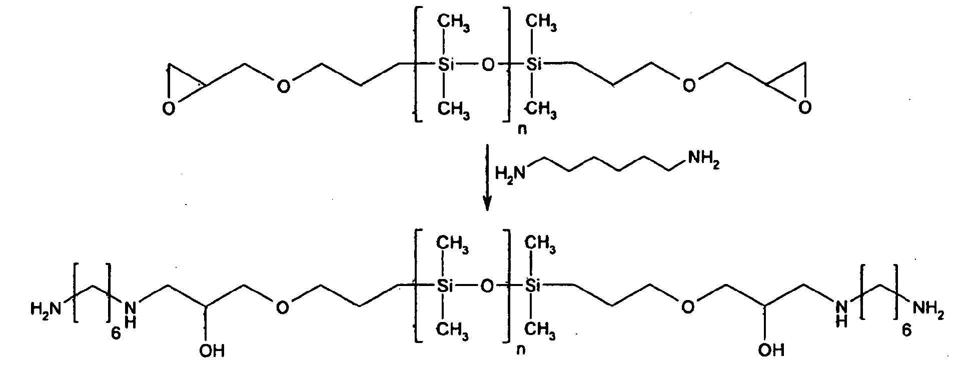

### Synthesebeispiel 7

### Herstellung von hydroxyfunktionellem, diamino-terminiertem PDMS [7] mit mittlerem Molekulargewicht durch Addition von Diamin an PDMS-Diepoxid

9,6 g Hexamethylendiamin wurden in 30 ml Methanol unter Stickstoffatmosphäre auf 60 °C erhitzt. 5,0 g 3-(oxiranylmethoxy)propyl-terminiertes PDMS in 20 ml THF wurden langsam zugetropft und die Reaktionslösung 12 h lang bei 60 °C gerührt. Das Lösungsmittel wurde im Vakuum abgezogen, der Rückstand in 100 ml Ethylacetat aufgenommen und mit Wasser (3 x 20 ml) geschüttelt. Die organische Phase wurde über Na₂SO₄ getrocknet und das Lösungsmittel im Vakuum entfernt. Es wurden 4,3 g von Verbindung [7] als leicht gelbliches, klares Öl erhalten.
¹H-NMR (CDCl₃, δ, ppm): 3,79 (m, 2H, CH), 3,38 (m, 8H, CH₂-O-CH₂), 2,75-2,45 (m, 12H, N-CH₂), 1,80-1,20 (m, 26H, (CH₂)₄, Si-CH₂-CH₂, NH), 0,48 (m, 4H, Si-CH₂), 0,03 (m, 186H, Si-CH₃).
¹³C-NMR (CDCl₃, δ, ppm): 74,30, 73,46 (C-O-C), 68,78 (C-OH), 52,15, 49,81 (C-NH-C), 42,13 (C-NH₂), 33,73, 30,12, 27,12, 26,76, ((CH₂)₄), 23,34 (Si-C-C),14,09 (Si-C-C), 0,99 (Si-CH₃).

Aus den 186 Si-CH₃-Wasserstoffatomen ergaben sich 31 Si-Atome pro Molekül.

### Synthesebeispiele 8 und 9

Hydroxyfunktionelles, amino-terminiertes PDMS [8] mit hohem Molekulargewicht und hydroxyfunktionelles, amino-terminiertes PDMS [9] mit niedrigem Molekulargewicht wurden analog zu den Synthesebeispielen 2 und 3 durch Äquilibrierung von [7] mit Octamethylcyclotetrasiloxan bzw. Depolymerisation von [7] hergestellt und fielen als farblose, klare Öle bei Äquilibrierung bzw. milchige Öle bei Depolymerisation in nahezu quantitativer Ausbeute an. Die Anzahl der Si-Atome wurde aus dem ¹H-NMR-Spektrum mit 79 bzw. 14 ermittelt.

### Synthesebeispiele 10 bis 12

### Herstellung von ethylamino-terminiertem PDMS ohne Hydroxyfunktionalität

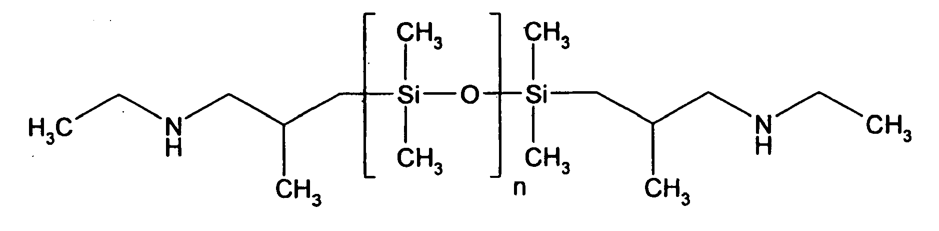

Ethylamino-terminiertes PDMS mit mittlerem, hohem und niedrigem Molekulargewicht, jedoch ohne Hydroxyfunktionalität, d.h. die Verbindungen [10] (n = 29), [11] (n = 78) und [12] (n = 15) wurden durch Äquilibrierung von handelsüblichem Bis(3-ethylamino-2-methyl-propyl)-PDMS mit einer Kettenlänge von etwa 10 SiO-Einheiten (d.h. einem mittleren Molekulargewicht von ca. 900 g/mol) (erhältlich z.B. von Degussa-Goldschmidt als Tegomer^{®} A-Si 2122) mit Octamethylcyclotetrasiloxan und Tetramethylammoniumhydroxid unter jeweiliger Entfernung niedermolekularer Bestandteile im Äquilibrierungsgleichgewicht bei Raumtemperatur im Vakuum hergestellt. Die Gleichgewichtsverteilung wurde jeweils mittels GPC kontrolliert. Die drei Zielverbindungen fielen in jeweils über 90 % Ausbeute als farblose, klare Öle an.
¹H-NMR (CDCl₃, δ, ppm): 2,70-2,30 (m, 8H, CH₂-N-CH₂), 1,90-1,65 (m, 2H, CH), 1,15-0,85 (m, 12H, CH₃-CH₂-N, CH-CH₃), 0,70-0,30 (m, 4H, Si-CH₂), 0,02 (m, 180H bzw. 474H bzw. 96H Si-CH₃).
¹³C-NMR (CDCl₃, δ, ppm) und DEPT-NMR: 59,22 (CH₂-N-CH₂-CH₃), 44,02 (N-CH₂-CH₃), 29,17 (CH), 24,37 (Si-CH₂), 20,85 (CH-CH₃), 15,25 (N-CH₂-CH₃).

Die Anzahl der Si-Atome der Verbindungen [10], [11] und [12] wurde aus dem ¹H-NMR-Spektrum mit 30, 79 bzw. 16 ermittelt.

Die NMR-Daten der Polymer-Endgruppen entsprachen jenen des eingesetzten oligomeren "Kettenstoppers" (Tegomer^{®} A-Si 2122).

### Synthesebeispiel 13

### Herstellung von hydroxyfunktionellem, methylamino-terminiertem PDMS [13] und [14] mit mittlerem Molekulargewicht und zyklischer Struktur im Molekül

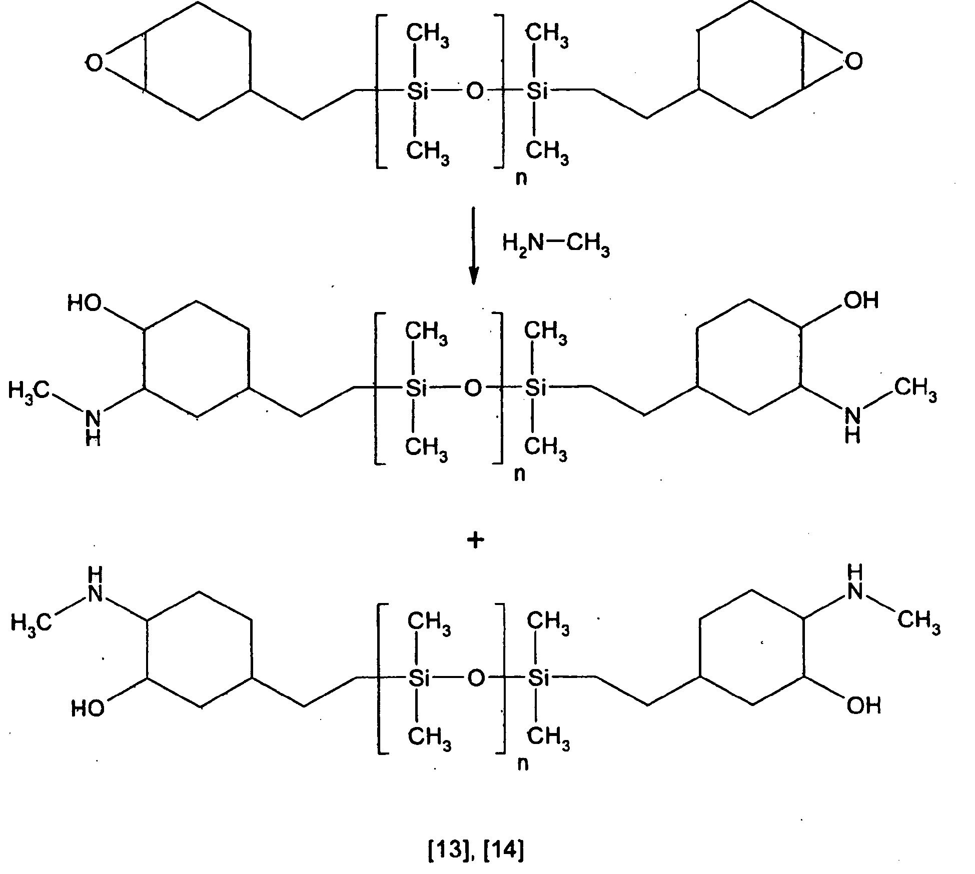

Das Ausgangsprodukt wurde durch literaturbekannte Addition von SiH-terminiertem PDMS mit mittlerem Molekulargewicht (n = 29, d.h. ca. 30 Si-Atomen) an Epoxy-4-vinylcyclohexan hergestellt. Die Addition von Methylamin an das Epoxid erfolgte anschließend analog zu Synthesebeispiel 1. Dabei wurde in praktisch quantitativer Ausbeute ein Gemisch der Verbindungen [13] und [14] als farbloses, klares Öl erhalten.

Dieses Gemisch wurde ohne Trennung der beiden Isomeren für die nachfolgenden Reaktionen eingesetzt.
¹H-NMR (CDCl₃, δ, ppm): 3,35-3,10 (m, 6H, CH-OH, NH), 2,41 (s, 6H, NCH₃), 2,20-1,95 (m, 4H), 1,75-1,65 (m, 4H), 1,35-0,88 (m, 12H), 0,52-0,47 (m, 4H, Si-CH₂), 0,05 (m, 186H, Si-CH₃).
¹³C-NMR (CDCl₃, δ, ppm): 73,11 (C-O), 64,93 (C-N), 41,17, 33,96, 33,16, 29,39, 24,81, 23,33, 14,01, 0,93.

Die Anzahl der Si-Atome des Gemischs der Verbindungen [13] und [14] wurde aus dem ¹H-NMR-Spektrum mit 31 ermittelt.

### Synthesebeispiele 14 bis 16

### Herstellung von amino-terminiertem PDMS ohne Hydroxyfunktionalität

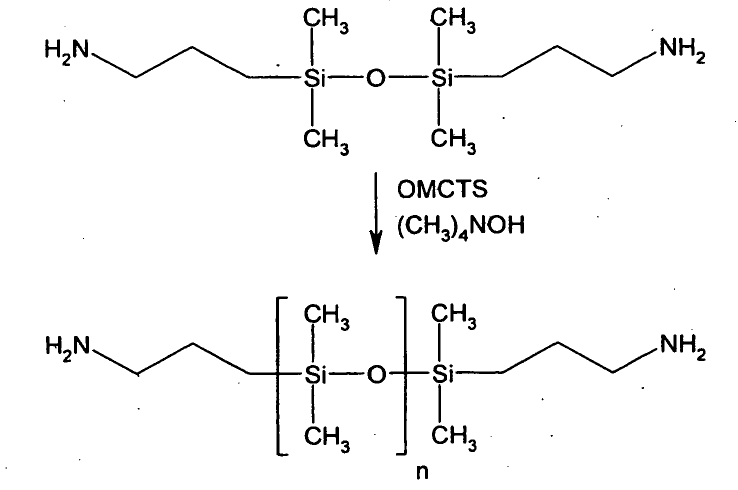

Amino-terminiertes PDMS mit mittlerem, hohem und niedrigem Molekulargewicht, jedoch ohne Hydroxyfunktionalität, d.h. die Verbindungen [15] (n = 30), [16] (n = 79) und [17] (n = 15) wurden durch Äquilibrierung von handelsüblichem Bis(3-amino-propyl)tetramethyldisiloxan (erhältlich z.B. von Fa. Lancaster; CAS 2469-55-8; 97%-ig) mit Octamethylcyclotetrasiloxan und Tetramethylammoniumhydroxid unter Stickstoffatmosphäre und jeweiliger Entfernung niedermolekularer Bestandteile im Äquilibrierungsgleichgewicht bei Raumtemperatur im Vakuum hergestellt. Die Gleichgewichtsverteilung wurde jeweils mittels GPC kontrolliert. Die drei Zielverbindungen fielen in jeweils über 85%iger Ausbeute als farblose, klare Öle an.
¹H-NMR (CDCl₃, δ, ppm): 2,62 (t, 4H, N-CH₂), 1,50-1,25 (m, 8H, NH₂-CH₂-CH₂), 0,58-0,40 (m, 4H, Si-CH₂), 0,03 (m, 186H bzw. 480H bzw. 96H, Si-CH₃).

Da die ¹H-NMR-Daten der Polymer-Endgruppen jeweils jenen des "Kettenstoppers" Bis(3-aminopropyl)tetramethyldisiloxan entsprachen, wurde kein ¹³C-NMR-Spektrum der Polymere aufgenommen.

Die Anzahl der Si-Atome der Verbindungen [15], [16] und [17] wurde aus dem ¹H-NMR-Spektrum mit 31, 80 bzw. 16 ermittelt.

Mittels GPC wurde in allen drei Fällen die typische Poisson-Verteilung des äquilibrierten PDMS festgestellt.

### Beispiele 1 bis 3

### Herstellung von hydroxyfunktionellem, N-methylacrylamido-terminiertem PDMS

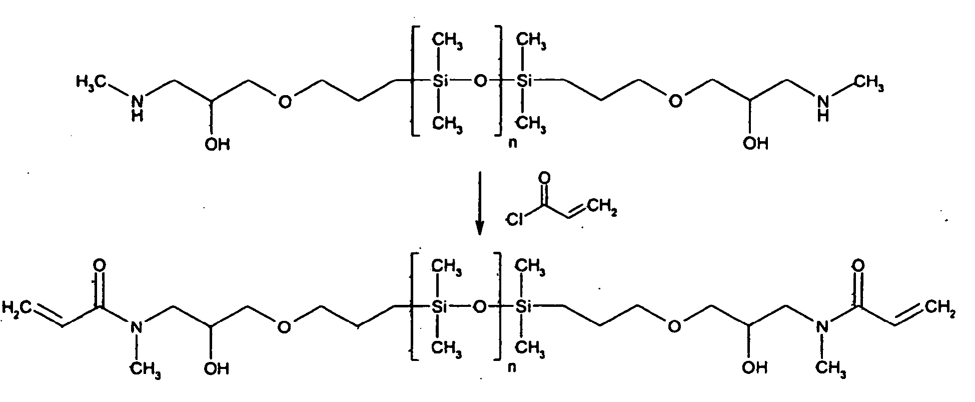

### Beispiel 1

### Herstellung von hydroxyfunktionellem, N-methylacrylamido-terminiertem PDMS [18] durch Acrylierung von [1]

20 g [1] (8,4 mmol) wurden in 80 ml Ethylacetat zusammen mit 3,2 g NaHCO₃ (38,0 mmol) in 20 ml Wasser unter Stickstoffatmosphäre mittels Eisbad gekühlt. Innerhalb 1 h wurden 2 ml (25,3 mmol) Acrylsäurechlorid in 20 ml Ethylacetat zugetropft. Nach 12 h Rühren bei Raumtemperatur wurde die Reaktionslösung mit 50 ml Ethylacetat verdünnt. Die wässrige Phase wurde abgetrennt, die organische Phase über Na₂SO₄ getrocknet und mit 20 mg (1000 ppm) Hydrochinon-monomethylether inhibiert. Nach Abziehen des Lösungsmittels im Vakuum wurden 19,6 g (94 % d. Th.) der erfindungsgemäßen Verbindung [18] (n = 27) als farbloses, klares Öl erhalten.
¹H-NMR (CDCl₃, δ, ppm): 6,85-6,00 (m, 4H, CO-CH, cis-CH=CH₂), 5,80-5,50 (m, 2H, trans-CH=CH₂), 3,96 (m, 2H, CH), 3,70-3,30 (m, 12H, CH₂-O-CH₂, N-CH₂), 3,20-3,00 (m, 6H, N-CH₃), 1,58 (m, 4H, Si-CH₂-CH₂), 0,49 (m, 4H, Si-CH₂), 0,05 (m, 168H, SiCH₃).
¹³C-NMR (CDCl₃, δ, ppm) Konformerensignale sind nach abnehmender Intensität geordnet: 168,11, 167,10 (C=O), 128,58, 127,24, 127,87, 127,61 (C=C), 74,18, 72,29, 70,00, 68,75, 74,27, 71,76 (C-O-C-C-OH), 52,66 (CH₂N), 37,52, 34,98 (CH₃N), 23,35 (Si-C-C), 14,12 (Si-CH₂), 0,96 (Si-CH₃).

GPC-Analyse bestätigte dieselbe Polydispersität für Ausgangs- und Zielverbindung. Die Anzahl der Si-Atome wurde aus dem ¹H-NMR-Spektrum mit 28 ermittelt.

### Beispiele 2 und 3

Auf analoge Weise wurden die Diacrylamide der Verbindungen [2] und [3], d.h. die erfindungsgemäßen Verbindungen [19] (n = 81) und [20] (n = 13) als farblose, klare Öle (Ausbeute: 96 % bzw. 91 % d. Th.) erhalten. Die NMR-Daten unterscheiden sich von jenen der Verbindung [18] lediglich in der Anzahl der CH₃-Si-Einheiten. Die Anzahl der Si-Atome der Verbindungen [19] und [20] wurde aus dem ¹H-NMR-Spektrum mit 82 bzw. 14 bestätigt.

### Beispiele 4 bis 6

### Herstellung von hydroxyfunktionellem, acrylamido-terminiertem PDMS

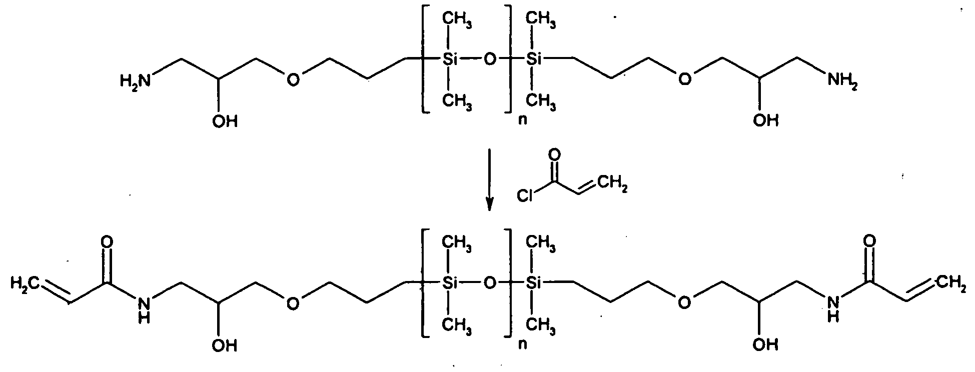

Analog zu Beispiel 1 wurden die Acrylamide der Verbindungen [4], [5] und [6], d.h. die erfindungsgemäßen Verbindungen [21] (n = 26), [22] (n = 79) und [23] (n = 15) durch Acrylierung der Aminogruppen als farblose, klare Öle erhalten (Ausbeuten: 92 %, 93 % bzw. 88 % d. Th.).
¹H-NMR (CDCl₃, δ, ppm): 6,40-6,00 (m, 6H, CO-CH, cis-CH=CH₂, NH), 5,24 (dd, 2H, trans-CH=CH₂), 4,20-3,20 (m, 16H, CH₂-O-CH₂-CHOH-CH₂-N), 1,57 (m, 4H, Si-CH₂-CH₂), 0,49 (m, 4H, Si-CH₂), 0,05 (m, 162H bzw. 480H bzw. 96H, Si-CH₃).
¹³C-NMR (CDCl₃, δ, ppm): 166,33 (C=O), 130,57, 126,74 (C=C), 74,31, 72,41, 69,59 (C-O-C-C-OH), 42,63 (CH₂N), 23,37 (Si-C-C), 14,13 (Si-CH₂), 1,01 (Si-CH₃).

Die Anzahl der Si-Atome der Verbindungen [21], [22] und [23] wurde aus dem ¹H-NMR-Spektrum ermittelt und betrug 27, 80 bzw. 16.

### Beispiele 7 bis 9

### Herstellung von hydroxyfunktionellem, acrylamido-terminiertem PDMS mit 4 Acrylamid-Gruppierungen pro Molekül

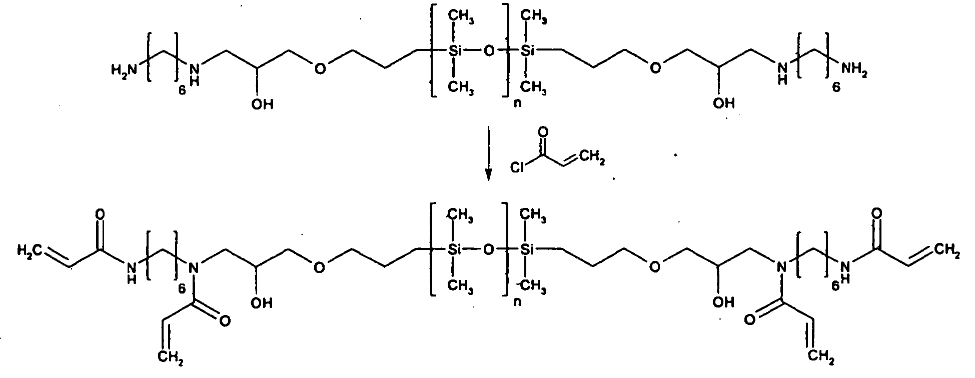

Analog zu Beispiel 1, allerdings unter Einsatz der doppelten Menge an Acrylsäurechlorid und NaHCO₃, wurden die Acrylamide der Verbindungen [7], [8] und [9], d.h. die erfindungsgemäßen Verbindungen [24] (n = 30), [25] (n = 78) und [26] (n = 13) durch Acrylierung der vier Aminogruppen im Molekül als leicht gelbliche, klare Öle erhalten (Ausbeuten: 89 %, 91 % bzw. 85 % d. Th.).
¹H-NMR (CDCl₃, δ, ppm): 6,85-6,00 (m, 10H, CO-CH, cis-CH=CH₂, NH), 5,85-5,50 (m, 4H, trans-CH=CH₂), 3,95 (m, 2H, CH), 3,60-3,20 (m, 20H, CH₂-O-CH₂, CH₂-N-CH₂, N-CH₂), 1,70-1,20 (m, 20H, (CH₂)₄, Si-CH₂-CH₂), 0,47 (m, 4H, Si-CH₂), 0,05 (m, 186H bzw. 474H bzw. 84H, Si-CH₃).
¹³C-NMR (CDCl₃, δ, ppm) (ohne Konformerensignale): 168,06, 165,70 (C=O), 130,90, 128,81, 127,05, 126,05 (C=C), 74,16, 72,37, 70,42 (C-O-C-C-OH), 51,23, 49,76 (CH₂-N-CH₂), 39,25 (CH₂N), 29,33, 29,14, 26,50, 26,25 ((CH₂)₄), 23,29 (Si-C-C), 14,06 (Si-CH₂), 0,91 (Si-CH₃).

Die Anzahl der Si-Atome der Verbindungen [24], [25] und [26] wurde aus dem ¹H-NMR-Spektrum ermittelt und betrug 31, 79 bzw. 14.

### Beispiele 10 bis 12

### Herstellung von hydroxyfunktionellem, N-methylmethacrylamido-terminiertem PDMS

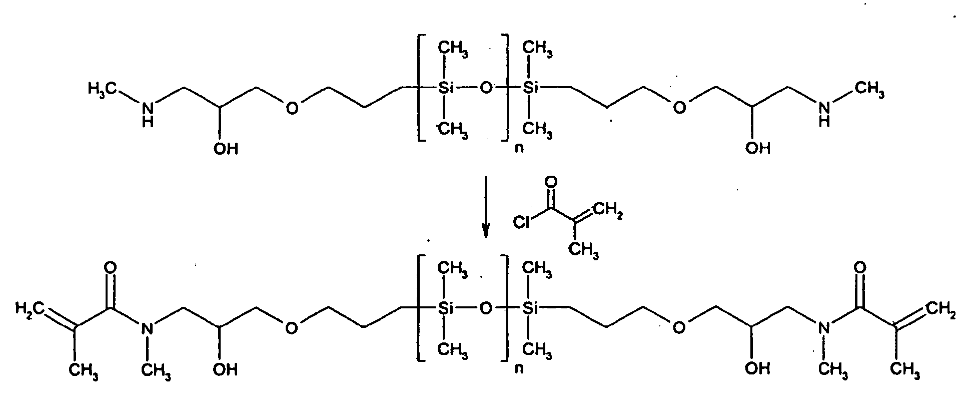

Analog zu den Beispielen 1 bis 3, allerdings unter Verwendung von Methacrylsäurechlorid anstelle von Acrylsäurechlorid, wurden die Methacrylamide der Verbindungen [1], [2] und [3], d.h. die erfindungsgemäßen Verbindungen [27] (n = 27), [28] (n = 81) und [29] (n = 13), als farblose, klare Öle erhalten (Ausbeuten: 93 %, 93 % bzw. 90 % d. Th.).
¹H-NMR (CDCl₃, δ, ppm): 5,19 (m, 2H, cis-C=CH₂), 5,03 (m, 2H, trans-C=CH₂), 3,96 (m, 2H, CH), 3,72-3,25 (m, 12H, CH₂-O-CH₂, N-CH₂), 3,20-3,05 (m, 6H, N-CH₃), 1,96 (s, 6H, CH₃-C=C), 1,58 (m, 4H, Si-CH₂-CH₂), 0,49 (m, 4H, Si-CH₂), 0,05 (m, 168H bzw. 492H bzw. 84H, Si-CH₃).
¹³C-NMR (CDCl₃, δ, ppm): 173,19 (C=O), 140,25, 115,38, 114,88 (C=C), 74,18, 72,28, 70,05, 68,71, 74,26, 71,76 (C-O-C-C-OH), 37,52, 34,98 (CH₃-N), 23,35 (Si-C-C), 20,59, 19,63 (CH₃-C), 14,13 (Si-CH₂), 0,97 (Si-CH₃).

Die Anzahl der Si-Atome der Verbindungen [27], [28] und [29] wurde aus dem ¹H-NMR-Spektrum ermittelt und betrug 28, 82 bzw. 14.

### Beispiel 13

### Herstellung von hydroxyfunktionellem, N-methylacrylamido-terminiertem PDMS mit zyklischen Strukturen im Molekül

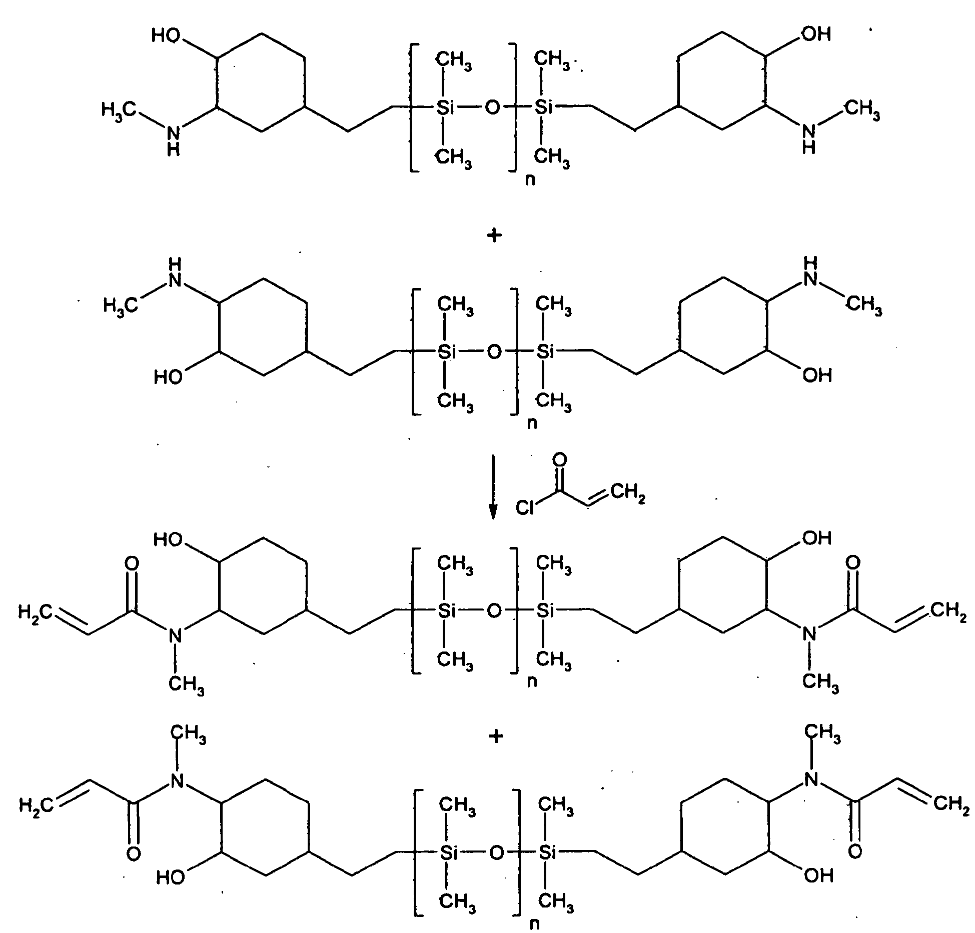

Analog zu Beispiel 1 wurden die Acrylamide der Verbindungen [13] und [14] als Gemisch, d.h. ein Gemisch der erfindungsgemäßen Verbindungen [30] und [31] (n = 30) durch Acrylierung der Aminogruppen als farbloses, klares Öl (Ausbeute: 94 % d. Th.) erhalten.
¹H-NMR (CDCl₃, δ, ppm): 6,70-6,40 (m, 2H, CO-CH), 6,35-6,25 (m, 2H, cis-CH=CH₂), 5,65-5,45 (m, 2H, trans-CH=CH₂), 5,03 (bs, 2H, OH), 3,52-3,05 (m, 4H, N-CH, O-CH), 2,83 (s, 6H, N-CH₃), 2,02-0,95 (m, 18H), 0,68-0,28 (m, 4H, Si-CH₂), 0,02 (m, 186H, Si-CH₃).
¹³C-NMR (CDCl₃, δ, ppm): 167,11 (C=O), 128,12, 126,41 (C=C), 68,95 (C-OH), 43,69, 42,70, 35,84, 34,10, 33,50, 32,35, 25,94, 19,00, 1,07.

Die Anzahl der Si-Atome des Gemischs der Verbindungen [30] und [31] wurde aus dem ¹H-NMR-Spektrum ermittelt und betrug 31.

### Vergleichsbeispiele 1 bis 3

### Herstellung von N-ethylacrylamido-terminiertem PDMS ohne Hydroxyfunktionalität

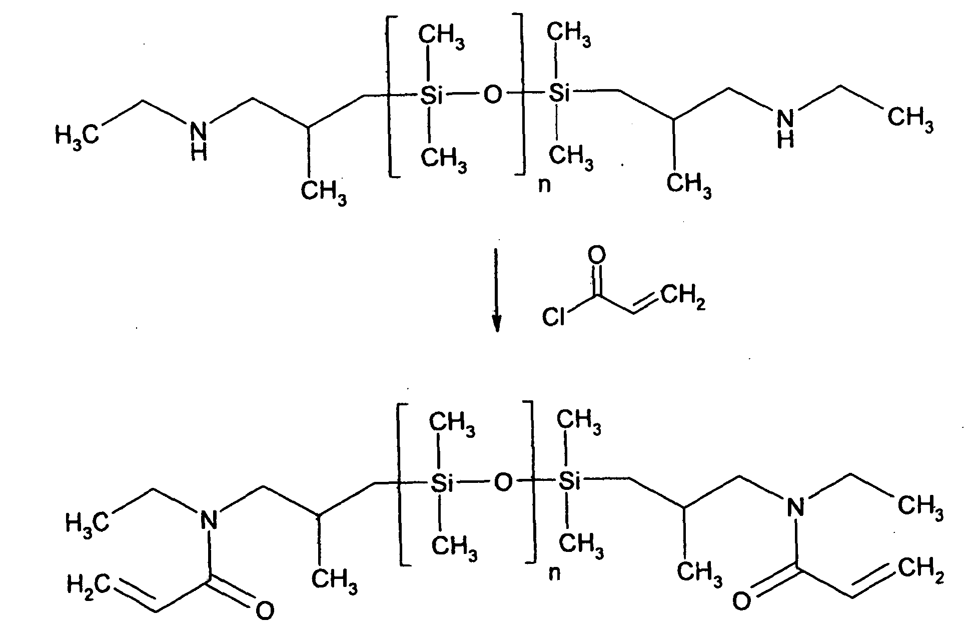

### Vergleichsbeispiel 1

### Herstellung von N-ethylacrylamido-terminiertem PDMS [32] durch Acrylierung von [10]

14,7 g [10] wurden in 80 ml Ethylacetat zusammen mit 30 ml gesättigter NaHCO₃-Lösung unter Stickstoffatmosphäre mittels Eisbad gekühlt. Innerhalb 1 h wurden 1,2 ml Acrylsäurechlorid in 20 ml Ethylacetat zugetropft. Nach 12 h Rühren bei Raumtemperatur wurde die Reaktionslösung mit 50 ml Ethylacetat verdünnt. Die wässrige Phase wurde abgetrennt, die organische Phase über Na₂SO₄ getrocknet und mit 14 mg (1000 ppm) Hydrochinon-monomethylether inhibiert. Nach Abziehen des Lösungsmittels im Vakuum wurden 14,1 g [32] (n = 29) als farbloses, klares Öl erhalten.
¹H-NMR (CDCl₃, δ, ppm): 6,65-6,40 (m, 2H, CO-CH), 6,40-6,30 (m, 2H, cis-CH=CH₂), 5,70-5,50 (m, 2H, trans-CH=CH₂), 3,50-2,95 (m, 8H, CH₂-N-CH₂), 1,94 (m, 2H, CH), 1,20-0,80 (m, 12H, CH₃), 0,70-0,30 (m, 4H, Si-CH₂), 0,02 (m, 180H, Si-CH₃).
¹³C-NMR (CDCl₃, δ, ppm) und DEPT-NMR: zwei Konformationsisomere mit gleichem Intensitätsverhältnis: 166,13, 166,01 (C=O), 128,12, 127,74 (CH=CH₂), 127,55, 127,20 (CH=CH₂), 56,05, 54,18 (N-CH₂-CH), 42,79, 41,63 (N-CH₂-CH₃), 29,27, 27,98 (CH), 23,67, 23,46 (Si-CH₂), 20,14, 19,95 (CH₃-CH), 14,46, 12,49 (N-CH₂-CH₃), 0,92 (Si-CH₃).

Die Anzahl der Si-Atome wurde aus dem ¹H-NMR-Spektrum ermittelt und betrug 30.

### Vergleichsbeispiele 2 und 3

Auf analoge Weise wie in Vergleichsbeispiel 1 wurden die Acrylamide der Verbindungen [11] und [12], d.h. die Verbindungen [33] (n = 78) und [34] (n = 15) als farblose, klare Öle erhalten. Die NMR-Daten unterscheiden sich von jenen von Verbindung [32] lediglich in der Anzahl der CH₃-Si-Einheiten. Die Anzahl der Si-Atome der Verbindungen [33] und [34] betrug laut ¹H-NMR-Spektrum 79 bzw. 16.

### Vergleichsbeispiele 4 bis 6

### Herstellung von N-ethylmethacrylamido-terminiertem PDMS ohne Hydroxyfunktionalität

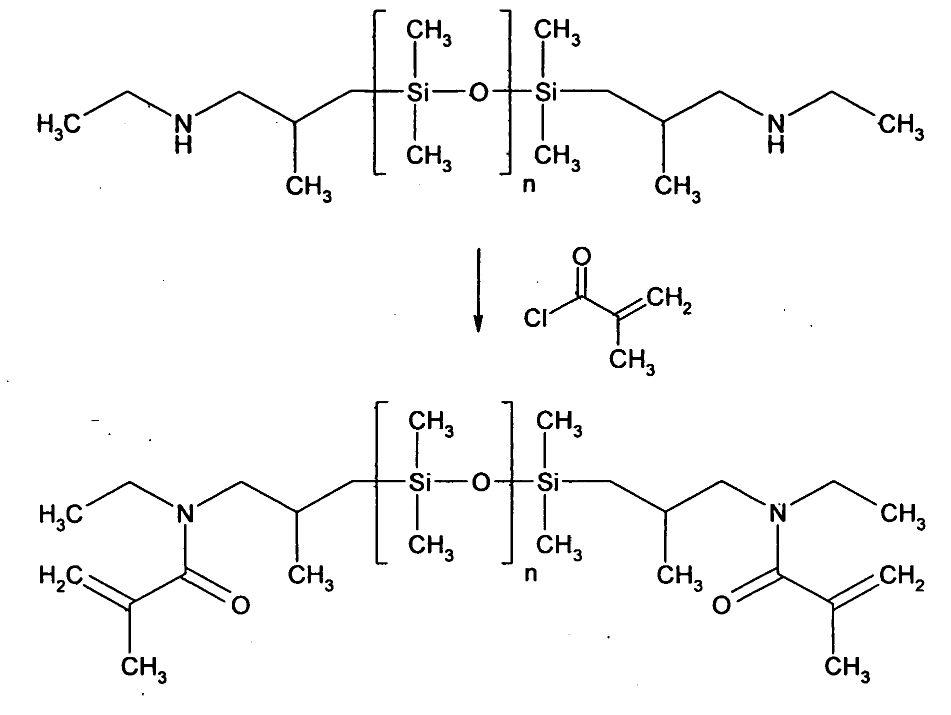

Auf analoge Weise wie in Vergleichsbeispiel 1, allerdings unter Verwendung von Methacrylsäurechlorid anstelle von Acrylsäurechlorid, wurden die Methacrylamide der Verbindungen [10], [11] und [12], d.h. die Verbindungen [35] (n = 29), [36] (n = 78) und [37] (n = 15) als farblose, klare Öle erhalten.
¹H-NMR (CDCl₃, δ, ppm): 5,83-5,73 (m, 2H, cis-C=CH₂), 5,25-5,15 (m, 2H, trans-C=CH₂), 3,60-3,15 (m, 8H, CH₂-N-CH₂), 1,95 (m, 6H, CO-CH₃), 1,75-1,50 (m, 2H, CHCH₃), 1,15-1,10 (m, 6H, CH₃CH₂N), 0,92-0,78 (m, 6H, CHCH₃), 0,70-0,30 (m, 4H, Si-CH₂), 0,02 (m, 96H, Si-CH₃).
¹³C-NMR (CDCl₃, δ, ppm) mit Signalen von Konformeren: 170,35, 170,29 (C=O), 138,01, 137,84 (CH=CH₂), 128,45, 127,20 (CH=CH₂), 57,09, 55,71, 42,79, 41,63, 29,27, 27,98, 23,67, 23,46, 20,14, 19,95, 14,46, 12,68, 0,93.

Die Anzahl der Si-Atome der Verbindungen [35], [36] und [37] wurde aus dem ¹H-NMR-Spektrum ermittelt und betrug 30, 79 bzw. 16.

### Vergleichsbeispiele 7 bis 9

### Herstellung von acrylamido-terminiertem PDMS ohne Hydroxyfunktionalität

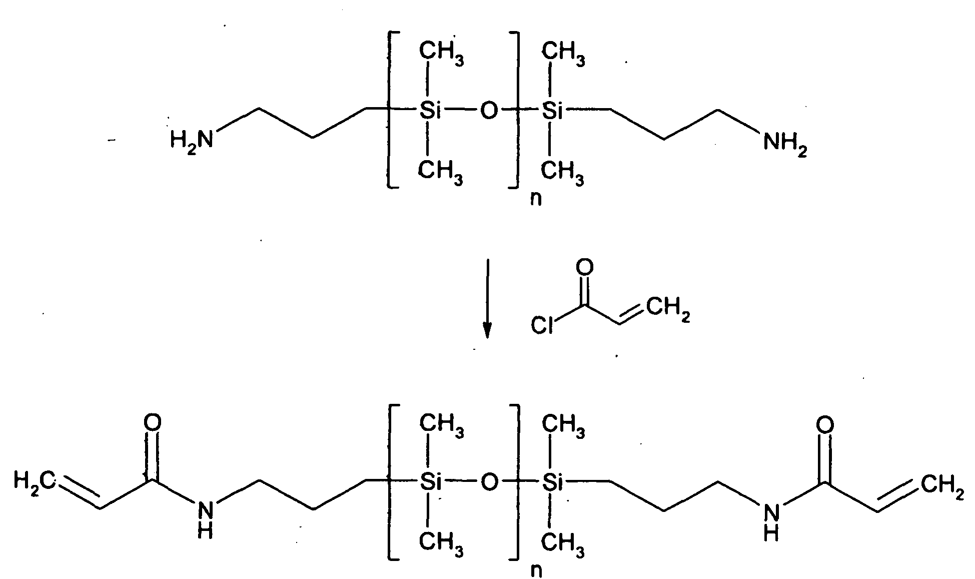

Analog zu den Vergleichsbeispielen 1 bis 3 wurden durch Acrylierung der Verbindungen [15], [16] und [17] die Verbindungen [38] (n = 30), [39] (n = 79) und [40] (n = 15) als farblose, klare Öle erhalten.
¹H-NMR (CDCl₃, δ, ppm): 6,40-5,95 (m, 6H, NH, CO-CH, cis-CH=CH₂), 5,55 (dd, 2H, trans-CH=CH₂), 3,35-3,15 (m, 4H, N-CH₂), 1,65-1,40 (m, 4H, N-CH₂-CH₂), 0,60-0,40 (m, 4H, Si-CH₂), 0,03 (m, 186H bzw. 480H bzw. 96H, Si-CH₃).
¹³C-NMR (CDCl₃, δ, ppm): 165,52 (C=O), 131,08 (CH=CH₂), 125,91 (CH=CH₂), 42,41 (N-CH₂), 23,41 (N-CH₂-CH₂), 15,39 (Si-CH₂), 0,97 (Si-CH₃).

Die Anzahl der Si-Atome der Verbindungen [38], [39] und [40] wurde aus dem ¹H-NMR-Spektrum ermittelt und betrug 31, 80 bzw. 16.

In der GPC-Analyse weisen Edukte und Produkte jeweils identische Polydispersität auf.

### Aktivitätsmessungen

Die Verbindungen [18] bis [31] als Ausführungsformen der Erfindung, die Verbindungen [32] bis [40] der Vergleichsbeispiele sowie drei acrylsäureester-terminierte PDMS-Derivate als Verbindungen [41] bis [43] wurden wie nachstehend beschrieben auf ihre Aktivität getestet. Die letzteren drei Verbindungen waren ein acrylsäureester-terminiertes PDMS aus durchschnittlich etwa 16 Si-Atomen ohne Hydroxyfunktionalität (als Verbindung [41] bezeichnet), ein acrylsäureester-terminiertes PDMS aus durchschnittlich etwa 82 Si-Atomen ohne Hydroxyfunktionalität (als Verbindung [42] bezeichnet), sowie ein acrylsäureester-terminiertes PDMS aus durchschnittlich etwa 15 Si-Atomen mit einer Hydroxygruppe in β-Stellung zur Acrylatgruppierung (als Verbindung [43] bezeichnet). Alle drei Verbindungen wurden nach literaturbekannten, in der Einleitung dieser Beschreibung erwähnten Verfahren auf dem Fachmann geläufige Weise hergestellt, gereinigt und analog zu den Verbindungen der Erfindung analysiert, und die Anzahl ihrer Si-Atome wurde aus dem ¹H-NMR-Spektrum ermittelt.

Die obigen 26 Verbindungen wurden Photopolymerisationsversuchen unterzogen. Dabei wurde jede Verbindung unter Zusatz von 2 % Darocur^{®} 1173 (Ciba) als Initiator in Masse gehärtet. Die Bestrahlung erfolgte mittels eines Lichtleitersystems Efos Novacure in einem Wellenlängenbereich von 250-450 nm und mit einer Intensität von 900 mW/cm².

Die Messergebnisse sind in nachstehender Tabelle angegeben.

| Verbindung | Art | Kurzbeschreibung | Anzahl | ca. 15 Si-Atome | | | ca. 30 Si-Atome | | | ca. 80 Si-Atome | | |
|---|---|---|---|---|---|---|---|---|---|---|---|---|
| Nr. | | | an Acryl- | Rate x 10³ | DBC | tₘₐₓ | Rate x 10³ | DBC | tₘₐₓ | Rate x 10³ | DBC | tₘₐₓ |
| | | | gruppen | [mol.l⁻¹.s⁻¹] | [%] | [s] | [mol.l⁻¹.s⁻¹] | [%] | [s] | [mol.l⁻¹.s⁻¹] | [%] | [s] |
| 18 8 | Erf. | tert. Acrylamid mit OH | 2 | | | | 26,0 | 93,7 | 6,0 | | | |
| 19 | Erf. | - " - | 2 | | | | | | | 9,5 | 89,1 | 6,0 |
| 20 | Erf. | - " - | 2 | 40,8 | 96,7 | 6,0 | | | | | | |
| 21 | Erf. | sek. Acrylamid mit OH | 2 | | | | 22,2 | 85,1 | 6,0 | | | |
| 22 | Erf. | - " - | 2 | | | | | | | 7,8 | 81,3 | 6,5 |
| 23 | Erf. | - " - | 2 | 37,3 | 93,4 | 6,2 | | | | | | |
| 24 | Erf. | sek. + tert. Acrylamid mit OH | 4 | | | | 24,1 | 83,2 | 6,1 | | | |
| 25 | Erf. - " - | - " - | 4 | | | | | | | 9,4 | 76,8 | 6,4 |
| 26 | Erf. | - " - | 4 | 38,4 | 90,7 | 6,2 | | | | | | |
| 27 | Erf. | tert. Methacrylamid mit OH | 2 | | | | 17,9 | 76,6 | 8,2 | | | |
| 28 | Erf. | - " - | 2 | | | | | | | 6,9 | 66,1 | 8,1 |
| 29 | Erf. | - " - | 2 | 25,3 | 81,0 | 7,9 | | | | | | |
| 30 + 31 | Erf. | tert. Acrylamid mit OH + Ring | 2 | | | | 24,6 | 88,0 | 6,2 | | | |
| 32 | Vergl. | tert. Acrylamid ohne OH | 2 | | | | 18,1 | 65,4 | 6,5 | | | |
| 33 | Vergl. | - " - | 2 | | | | | | | 7,1 | 60,3 | 6,9 |
| 34 | Vergl. | - " - | 2 | 34,4 | 74,1 | 6,0 | | | | | | |
| 35 | Vergl. | tert. Methacrylamid ohne OH | 2 | | | | 13,2 | 61,9 | 8,6 | | | |
| 36 | Vergl. | - " - | 2 | | | | | | | 5,7 | 52,6 | 8,2 |
| 37 | Vergl. | - " - | 2 | 22,2 | 66,2 | 8,3 | | | | | | |
| 38 | Vergl. | sek. Acrylamid ohne OH | 2 | | | | 17,5 | 64,3 | 7,8 | | | |
| 39 | Vergl. | - " - | 2 | | | | | | | 6,3 | 50,4 | 6,6 |
| 40 | Vergl. | - " - | 2 | 27,7 | 72,4 | 7,2 | | | | | | |
| 41 | Vergl. | Acrylat ohne OH | 2 | 27,5 | 65,2 | 9,0 | | | | | | |
| 42 | Vergl. | - " - | 2 | | | | | | | 6,0 | 56,5 | 8,7 |
| 43 | Vergl. | Acrylat mit OH | 2 | 28,9 | 74,3 | 7,0 | | | | | | |

Darin bedeuten:
- "Art" der Verbindung entweder eine Verbindung als Ausführungsbeispiel der Erfindung ("Erf.") oder eines Vergleichsbeispiels ("Vergl.");
- "sek." und "tert. Acrylamid" ein sekundäres bzw. tertiäres Stickstoffatom der Acrylamido-Gruppen, d.h. einen bzw. zwei Nicht-Acryl-Substituenten am Stickstoffatom;
- "Rate" die Polymerisationsgeschwindigkeit der polymerisierbaren Doppelbindungen in Mol pro Liter und Sekunde;
- "DBC" ("double bond conversion") den Doppelbindungsumsatz als Prozentsatz der polymerisierbaren Doppelbindungen; und
- tₘₐₓ die Zeit bis zur Exothermenmaximum, d.h. bis zum Erreichen der maximalen Polymerisationsrate, in Sekunden.

### Diskussion

Aus der Tabelle geht klar hervor, dass die erfindungsgemäßen Verbindungen mit OH-Funktionalität jenen nach dem Stand der Technik in zumindest einem der drei Aspekte Reaktionsgeschwindigkeit (Rate), Doppelbindungsumsatz (DBC) und Zeit bis zum Erreichen der maximalen Rate (tₘₐₓ) deutlich überlegen sind, worauf später noch ausführlicher eingegangen wird. Auch untereinander sind jedoch zunächst klare Abstufungen in der Wirksamkeit der erfindungsgemäßen Verbindungen zu erkennen. Bei direktem Vergleich der Verbindungen mit und ohne zusätzliche N-Alkylierung am Amid-Stickstoff, d.h. der Verbindungen [18] bis [20] sowie des Gemischs aus [30] und [31] mit [21] bis [23], wird deutlich erkennbar, dass die Alkylierung und die damit verbundene niedrigere Viskosität der Zusammensetzungen eine Erhöhung der Rate um rund 10-20 % sowie einen um 5-10 % höheren DBC bewirkt, was speziell bei höheren Molekulargewichten und entsprechend eingeschränkter Mobilität der Moleküle zutage tritt.

Die Verbindungen [24] bis [26], die insgesamt 4 Acrylamid-Gruppen, mit und ohne weitere N-Alkylierung, enthalten, sind von ähnlicher Reaktivität (Rate), erreichen jedoch aufgrund der höheren Viskosität und stärkeren Vernetzung erwartungsgemäß nicht ganz die DBC-Werte der Verbindungen [18] bis [23] bzw. [30] und [31].

Ein direkter Vergleich der analogen Methacrylamide [27] bis [29] mit den Acrylamiden [18] bis [20] zeigt eine deutlich geringere Reaktivität der Methacrylsäurederivate. Bei Vergleich der Ersteren mit den Vergleichsverbindungen [35] bis [37] ohne OH-Gruppe zeigt jedoch eine bis zu 25%ige Erhöhung des DBC, wiederum speziell bei den hochmolekularen Verbindungen, aufgrund der Orientierung und Präorganisation der Moleküle vor der Polymerisation.

Obwohl die N-alkylierten Verbindungen [18] bis [20] sowie [30] und [31] die reaktivsten der gesamten Versuchsreihe waren und auch den höchsten DBC erzielten, tritt die Wirkung der Erfindung am deutlichsten bei den Verbindungen mit sekundärem Stickstoff in Bezug auf den DBC auf: Die erfindungsgemäßen Verbindungen [21] bis [23] weisen um über 60 % höhere DBC-Werte bei über 20 % höherer Rate auf als die sekundären Amide [38] bis [40] ohne OH-Gruppe.

Bei Vergleich der nicht erfindungsgemäßen Verbindungen [41] und [43], zwei Acrylsäureestern mit niedrigem Molekulargewicht, fällt ebenfalls auf, dass [43], die eine β-Hydroxy-Funktionalität besitzt, reaktiver ist und rascher (kürzere tₘₐₓ) sowie mit deutlich höherem DBC härtet als [41], was wohl ebenfalls auf die von den Erfindern erstmalig entdeckte und näher untersuchte Orientierungswirkung der OH-Gruppe zurückzuführen sein dürfte, die nach dem Stand der Technik nicht erkannt worden war.

Somit ist augenscheinlich, dass die vorliegende Erfindung eine Reihe von polymerisierbaren Polyorganosiloxanen bereitstellt, die mit höherer Reaktionsgeschwindigkeit sowie rascher und zu höheren Doppelbindungsumsätzen härtbar sind, als dies mit Verbindungen nach dem Stand der Technik bisher möglich war.

### Eigenschaften von Beschichtungen aus erfindungsgemäßen Verbindungen

### Difunktionelle β-Hydroxy-PDMS-Acrylamide der nachstehenden Formel

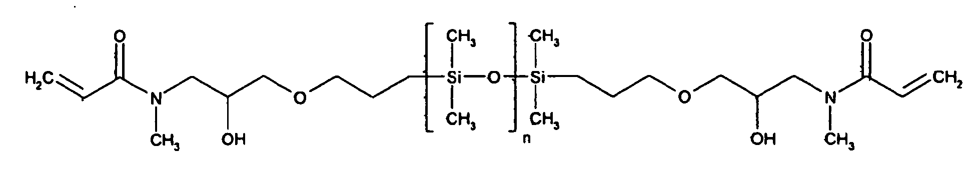

mit unterschiedlichem Molekulargewicht, d.h. die im Polymerisationsversuch aktivsten erfindungsgemäßen Verbindungen [18], [19] und [20] (mit n = 27, 81 bzw. 13) wurden gehärtet, und die so erhaltene Beschichtung wurde auf ihre mechanische Stabilität, Haftung und Abhäsiveigenschaften geprüft.

Dafür wurden jeweils 3 g der erfindungsgemäßen Verbindung mit 2 Gew.-% Photoinitiator Darocur^{®} 1173 versetzt, gut verrührt und mittels Stahlstab auf Glassine-Papier (120 g/m²) aufgetragen. Die beschichteten Papiere wurden in einer Inertkammer unter Sticktstoffatmosphäre 10 s lang mit UV-Licht (120 W) bestrahlt.

In der Praxis werden mit Mischungen von Acrylaten unterschiedlicher Molekulargewichte die besten Ergebnisse erzielt. Daher wurde auch ein Gemisch der Verbindungen [19] und [20] im Verhältnis 70:30 in gleicher Weise gehärtet.

### Prüfung:

Direkt nach der Härtung wurde die mechanische Stabilität durch Abreiben mit dem Daumen geprüft ("Rub-Off'-Test). Die Bewertung "ok" bedeutet, dass die Beschichtung mit dem Daumen kaum, d.h. nur unter erhöhtem Kraftaufwand, abreibbar war, während "leicht" angibt, dass sie leicht abgerieben werden konnte.

Die Trennwirkung wurde durch Aufbringen und Abziehen des Testklebebands "Tesa 7475" auf Acrylatbasis geprüft. Die Bewertung "sehr gut" bedeutet, dass das Klebeband mit geringem Kraftaufwand und rückstandsfrei abgezogen werden konnte, während "ausgezeichnet" angibt, dass das Testband ganz leicht rückstandsfrei ablösbar war.

Die Ergebnisse der vier Tests sind in nachstehender Tabelle angeführt.

| **Verbindung** | **Anzahl Si-Atome** | **Rub-Off** | **Tesa 7475** |
|---|---|---|---|
| [18] | 28 | ok | sehr gut |
| [19] | 82 | leicht | ausgezeichnet |
| [20] | 14 | ok | sehr gut |
| [19]+[20] (70:30) | 82/14 | ok | ausgezeichnet |

### Diskussion der Ergebnisse:

Alle vier Proben bildeten feste und gut haftende Filme. Verbindung [19] mit dem höchsten Silikonanteil, d.h. dem geringstem Anteil an Vernetzungsstellen, wies die geringste mechanische Stabilität auf, ergab aber - neben dem Gemisch mit [20] - das beste Trennergebnis. Durch Zusatz der niedermolekularen Verbindung [20] wurde aufgrund der höheren Vernetzungsdichte die mechanische Stabilität deutlich verbessert, gleichzeitig aber die ausgezeichnete Trennwirkung der längerkettigen Verbindung [19] beibehalten.

Somit geht aus obigen Tests klar hervor, dass die erfindungsgemäßen Verbindungen zur Herstellung von Beschichtungen, vor allem von Antihaftbeschichtungen, sehr gut geeignet sind.

## Patentansprüche

1. (Meth)acrylamid-modifiziertes lineares Polyorganosiloxan der allgemeinen Formel (1): 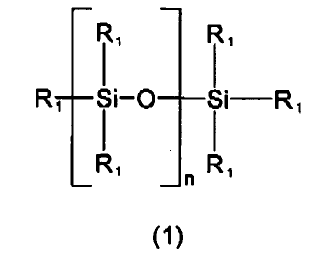 worin die R₁ jeweils unabhängig voneinander aus Alkylgruppen mit 1 bis 4 Kohlenstoffatomen, Phenylgruppen und Resten der nachstehenden Formeln (2) und (3) ausgewählt sind, mit der Maßgabe, dass zumindest ein R₁ ein Rest der Formel (2) oder (3) ist, und n eine ganze Zahl von zumindest 10, vorzugsweise zumindest 20, ist, 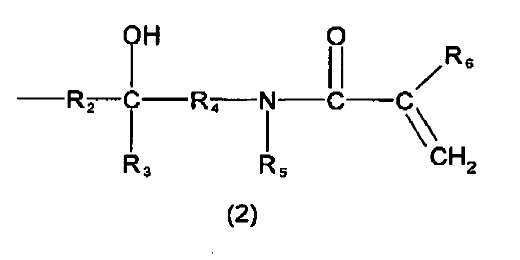 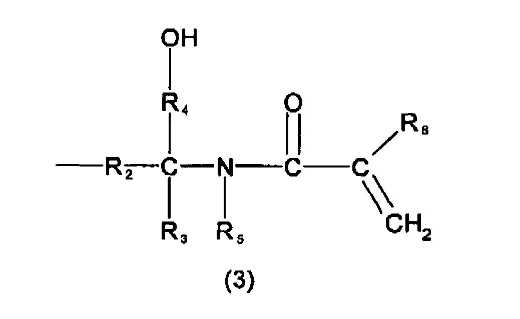 worin R₂ eine direkte Bindung oder ein gegebenenfalls Heteroatome enthaltender und gegebenenfalls mit -OH, Amino oder Acylamino substituierter, unverzweigter, verzweigter oder zyklischer zweiwertiger Kohlenwasserstoffrest mit 1 bis 20, vorzugsweise 2 bis 10, Kohlenstoffatomen ist;
R₃ ein Wasserstoffatom oder eine Alkylgruppe mit 1 bis 4 Kohlenstoffatomen ist;
R₄ ein gegebenenfalls Heteroatome enthaltender und gegebenenfalls mit -OH, Amino oder Acylamino substituierter, unverzweigter, verzweigter oder zyklischer zweiwertiger Kohlenwasserstoffrest mit 1 bis 20, vorzugsweise 1 bis 6, Kohlenstoffatomen ist; oder
R₂ und R₄ gemeinsam mit dem Kohlenstoffatom, an das sie gebunden sind, eine Ringstruktur bilden;
R₅ ein Wasserstoffatom oder eine Alkylgruppe mit 1 bis 4 Kohlenstoffatomen, vorzugsweise eine Alkylgruppe mit 1 bis 4 Kohlenstoffatomen, ist; und
R₆ ein Wasserstoffatom oder Methyl, vorzugsweise ein Wasserstoffatom, ist.

2. Polyorganosiloxan nach Anspruch 1, **dadurch gekennzeichnet, dass** die OH-Gruppe in Formel (2) in β-Stellung zum Stickstoff der (Meth)acrylamid-Gruppe liegt.

3. Polyorganosiloxan nach Anspruch 1 oder 2, **dadurch gekennzeichnet, dass** 1 bis 10, vorzugsweise 1 bis 6, noch bevorzugter 2 bis 4, der Reste R₁ Reste der Formel (2) sind.

4. Polyorganosiloxan nach einem der Ansprüche 1 bis 3, **dadurch gekennzeichnet, dass** zumindest ein R₁ an einem Ende der Polyorganosiloxan-Kette ein Rest der Formel (2) ist.

5. Polyorganosiloxan nach einem der vorangegangenen Ansprüche, **dadurch gekennzeichnet, dass** die nicht der Formel (2) entsprechenden Reste R₁ Methyl oder Phenyl sind.

6. Polyorganosiloxan nach einem der vorangegangenen Ansprüche, **dadurch gekennzeichnet, dass** R₃ ein Wasserstoffatom ist.

7. Polyorganosiloxan nach einem der vorangegangenen Anspruch, **dadurch gekennzeichnet, dass** R₂ -(CH₂)₂-O-CH₂- oder -(CH₂)₃-O-CH₂- ist.

8. Polyorganosiloxan nach einem der Ansprüche 1 bis 7, **dadurch gekennzeichnet, dass** R₄ -CH₂- ist.

9. Polyorganosiloxan nach einem der Ansprüche 1 bis 7, **dadurch gekennzeichnet, dass** zumindest ein Rest R₁ der folgenden Formel (6) oder (7) entspricht: 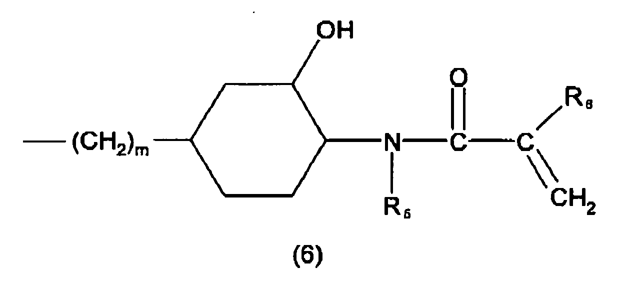 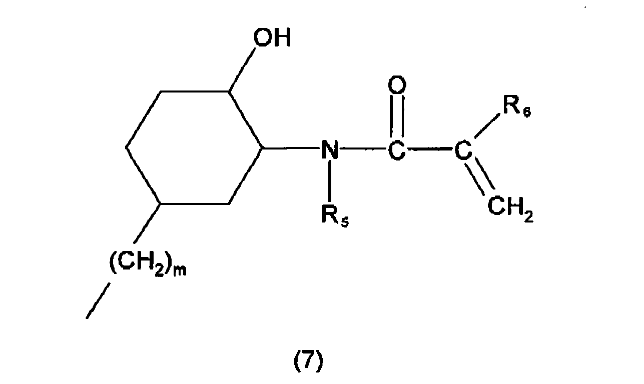 worin m eine ganze Zahl von 2 bis 6, vorzugsweise 2 oder 3, ist.

10. Polyorganosiloxan nach einem der vorangegangenen Ansprüche, **dadurch gekennzeichnet, dass** die optionalen Substituenten von R₂ und R₄ unabhängig voneinander aus -OH und -NHR₁₀ ausgewählt sind, worin R₁₀ ein Wasserstoffatom oder ein (Meth)acrylrest ist.

11. Polymerisierbare Zusammensetzung, die zumindest ein (Meth)acrylamid-modifiziertes lineares Polyorganosiloxan nach einem der Ansprüche 1 bis 10 als Monomer, gegebenenfalls im Gemisch mit weiteren Comonomeren, zumindest einen Polymerisationskatalysator und gegebenenfalls ein Lösungsmittel umfasst.

12. Zusammensetzung nach Anspruch 11, **dadurch gekennzeichnet, dass** der Katalysator ein Photopolymerisationskatalysator ist.

13. Verwendung eines (Meth)acrylamid-modifizierten linearen Polyorganosiloxans nach einem der Ansprüche 1 bis 10 oder einer Zusammensetzung nach Anspruch 11 oder 12 zum Beschichten von Gegenständen.

14. Verwendung nach Anspruch 13, **dadurch gekennzeichnet, dass** eine Antihaftbeschichtung hergestellt wird.

15. Durch Polymerisation einer Zusammensetzung nach Anspruch 11 oder 12 erhaltenes gehärtetes Produkt.

16. Produkt nach Anspruch 15, das ein Antihaftbeschichtungsfilm ist.

17. Mit einem Antihaftbeschichtungsfilm nach Anspruch 16 beschichteter Gegenstand.

18. Gegenstand nach Anspruch 17, der beschichtetes Papier oder eine beschichtete Kunststofffolie ist.

## Claims

1. A (meth)acrylamide-modified linear polyorganosiloxane of the general formula (1): 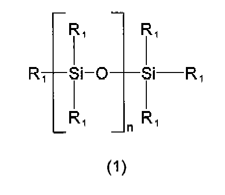 wherein each R₁ independently is selected from alkyl groups having 1 to 4 carbon atoms, phenyl groups and radicals of the following formulas (2) and (3), with the proviso that at least one R₁ is a radical of formula (2) or (3), and n is an integer of at least 10, preferably of at least 20, 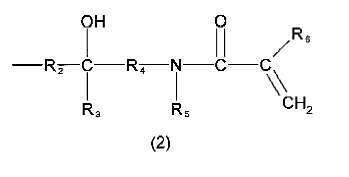 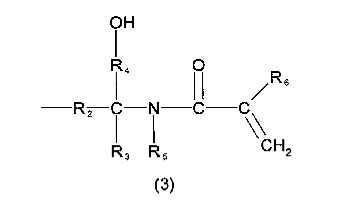 wherein
R₂ is a direct bond or a linear, branched, or cyclic bivalent hydrocarbon group having 1 to 20, preferably 2 to 10, carbon atoms, optionally containing heteroatoms and optionally being substituted with -OH, amino or acylamino;
R₃ is a hydrogen atom or an alkyl group having 1 to 4 carbon atoms;
R₄ is a linear, branched, or cyclic bivalent hydrocarbon group having 1 to 20, preferably 1 to 6, carbon atoms, optionally containing heteroatoms and optionally being substituted with -OH, amino or acylamino; or
R₂ and R₄ together with the carbon atom to which they are bound form a ring structure;
R₅ is a hydrogen atom or an alkyl group having 1 to 4 carbon atoms, preferably an alkyl group having 1 to 4 carbon atoms; and
R₆ is a hydrogen atom or methyl, preferably a hydrogen atom.

2. The polyorganosiloxane according to claim 1, **characterised in that** the OH-group in formula (2) is located at the β-position with respect to the nitrogen atom of the (meth)acrylamide group.

3. The polyorganosiloxane according to claim 1 or claim 2, **characterised in that** 1 to 10, preferably 1 to 6, more preferably 2 to 4, of the radicals R₁ are radicals according to formula (2).

4. The polyorganosiloxane according to any one of claims 1 to 3, **characterised in that** at least one R₁ at one end of the polyorganosiloxane chain is a radical according to formula (2).

5. The polyorganosiloxane according to any one of the preceding claims, **characterised in that** those R₁ which are not radicals according to formula (2) are methyl or phenyl.

6. The polyorganosiloxane according to any one of the preceding claims, **characterised in that** R₃ is a hydrogen atom.

7. The polyorganosiloxane according to any one of the preceding claims, **characterised in that** R₂ is -(CH₂)₂-O-CH₂- or -(CH₂)₃-O-CH₂-.

8. The polyorganosiloxane according to any one of claims 1 to 7, **characterised in that** R₄ is -CH₂-.

9. The polyorganosiloxane according to any one of claims 1 to 7, **characterised in that** at least one radical R₁ corresponds to the following formula (6) or (7): 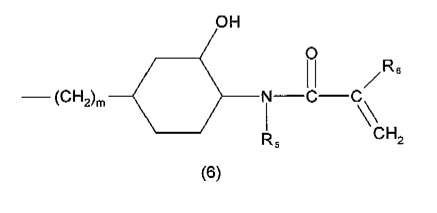 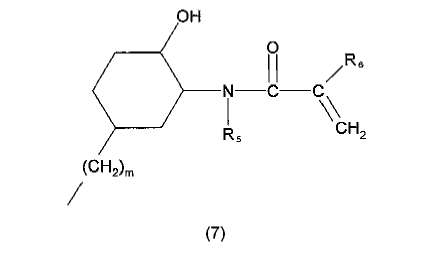 wherein m is an integer from 2 to 6, preferably 2 or 3.

10. The polyorganosiloxane according to any one of the preceding claims, **characterised in that** the optional substituents of R₂ and R₄ are independently selected from -OH and -NHR₁₀, wherein R₁₀ is a hydrogen atom or a (meth)acryl radical.

11. A polymerisable composition, comprising at least one (meth)acrylamide-modified linear polyorganosiloxane according to any one of claims 1 to 10 as a monomer, optionally in admixture with further comonomers, at least one polymerisation catalyst, and optionally a solvent.

12. The composition according to claim 11, **characterised in that** the catalyst is a photopolymerisation catalyst.

13. A use of the (meth)acrylamid-modified linear polyorganosiloxane according to any one of claims 1 to 10 or the composition according to claim 11 or claim 12 for coating articles.

14. The use according to claim 13, **characterised in that** a non-stick coating is produced.

15. A cured product obtained by polymerising the composition according to claim 11 or claim 12.

16. The product according to claim 15 which is a non-stick coating.

17. An article coated with the non-stick coating according to claim 16.

18. The article according to claim 17, which is coated paper or a coated plastic film.

## Revendications

1. Polyorganosiloxane, linéaire et modifié par de l'amide (méth)acrylique, selon la formule générale (1): 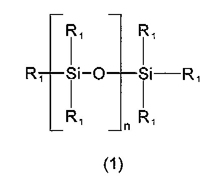 dans laquelle les groupes R₁ sont choisis, indépendamment l'un de l'autre, parmis les groupes alkyle de 1 à 4 atomes de carbone, les groupes phényle et les groupes selon l'une des formules (2) et (3) ci-dessous, sous réserve qu'au moins un groupe R₁ soit un groupe selon l'une des formules (2) et (3), et n est un nombre entier d'au moins 10, de préférence d'au moins 20, 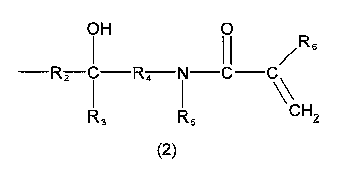 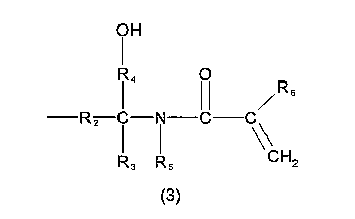 dans lesquelles
R₂ est une liaison directe ou un groupe hydrocarbure bivalent, linéaire, ramifié ou cyclique, de 1 à 20, de préférence de 2 à 10, atomes de carbone, qui, selon le cas, contient des hétéroatomes et qui, selon le cas, est substitué par -OH, un groupe amino ou un groupe acylamino;
R₃ est un atome d'hydrogène ou un groupe alkyle de 1 à 4 atomes de carbone;
R₄ est un groupe hydrocarbure bivalent, linéaire, ramifié ou cyclique, de 1 à 20, de préférence de 1 à 6, atomes de carbone, qui, selon le cas, contient des hétéroatomes et qui, selon le cas, est substitué par -OH, un groupe amino ou un groupe acylamino; ou
R₂ et R₄, ensemble avec l'atome de carbone auquel ils sont liés, forment une structure cyclique;
R₅ est un atome d'hydrogène ou un groupe alkyle de 1 à 4 atomes de carbone, de préférence un groupe alkyle de 1 à 4 atomes de carbone; et
R₆ est un atome d'hydrogène ou un groupe méthyle, de préférence un atome d'hydrogène.

2. Polyorganosiloxane selon la revendication 1, **caractérisé en ce que** le groupe -OH dans la formule (2) est situé en position β par rapport à l'atome de nitrogène du groupe (méth)acrylamide.

3. Polyorganosiloxane selon la revendication 1 ou 2, **caractérisé en ce qu'** 1 à 10, de préférence 1 à 6, de manière plus préférée 2 à 4, des groupes R₁ sont des groupes selon la formule (2).

4. Polyorganosiloxane selon l'une des revendications 1 à 3, **caractérisé en ce qu'** au moins un groupe R₁ à un bout de la chaîne polyorganosiloxanique est un groupe de la formule (2).

5. Polyorganosiloxane selon l'une des revendication précédentes, **caractérisé en ce que** les groupes R₁ qui ne sont pas des groupes selon la formule (2) sont des groupes méthyle ou phényle.

6. Polyorganosiloxane selon l'une des revendications précédentes, **caractérisé en ce que** R₃ est un atome d'hydrogène.

7. Polyorganosiloxane selon l'une des revendications précédentes, **caractérisé en ce que** R₂ est -(CH₂)₂-O-CH₂- ou -CH₂)₃-O-CH₂-.

8. Polyorganosiloxane selon l'une des revendications 1 à 7, **caractérisé en ce que** R₄ est -CH2⁻.

9. Polyorganosiloxane selon l'une des revendications 1 à 7, **caractérisé en ce qu'** au moins un groupe R₁ est un groupe selon l'une des formules suivantes (6) et (7): 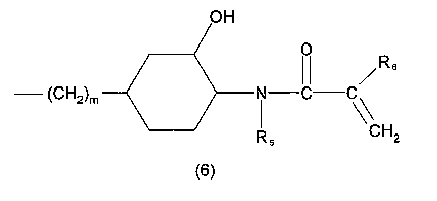 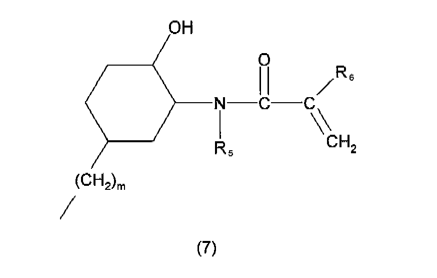 dans lesquelles m est un nombre entier de 2 à 6, de préférence 2 ou 3.

10. Polyorganosiloxane selon l'une des revendications précédentes, **caractérisé en ce que** les substituants éventuels de R₂ et R₄ sont choisis, indépendamment l'un de l'autre, parmis -OH et -NHR₁₀, où R₁₀ est un atome d'hydrogène ou un groupe (méth)acrylique.

11. Composition polymérisable, comprenant au moins un polyorganosiloxane, linéaire et modifié par de l'amide (méth)acrylique, selon l'une des revendications 1 à 10 comme monomère, selon le cas en mélange avec d'autres comonomères, au moins un catalyseur de polymérisation et, selon le cas, un solvant.

12. Composition selon la revendication 11, **caractérisée en ce que** le catalyseur est un catalyseur de photopolymérisation.

13. Utilisation d'un polyorganosiloxane, linéaire et modifié par de l'amide (méth)-acrylique, selon l'une des revendications 1 à 10 ou d'une composition selon la revendication 11 ou 12 pour revêtir d'articles.

14. Utilisation selon la revendication 13, **caractérisée en ce que** un revêtement antiadhésif est produit.

15. Produit durci, obtenu par la polymérisation d'une composition selon la revendication 11 ou 12.

16. Produit selon la revendication 15, qui est un revêtement antiadhésif.

17. Article revêtu d'un revêtement antiadhésif selon la revendication 16.

18. Article selon la revendication 17, qui est un papier revêtu ou une feuille en plastique revêtue.
